# EUROPEAN PATENT SPECIFICATION

(11) **EP 1 988 689 B1**
(45) Date of publication and mention of the grant of the patent: **16.05.2012**
(21) Application number: 07707714.7
(22) Date of filing: 30.01.2007
(51) Int. Cl.: H04M 1/02, G09F 9/00, H04M 1/23

(54) **DISPLAY HOLDING COMPONENT, PORTABLE ELECTRONIC DEVICE, AND METHOD OF ASSEMBLING DISPLAY HOLDING COMPONENT**
ANZEIGEHALTEKOMPONENTEN, TRAGBARES ELEKTRONISCHES GERÄT UND VERFAHREN ZUM ZUSAMMENBAU EINER ANZEIGEHALTEKOMPONENTE
COMPOSANT DE SUPPORT D'AFFICHAGE, DISPOSITIF ÉLECTRONIQUE PORTABLE ET PROCÉDÉ D ASSEMBLAGE D UN COMPOSANT DE SUPPORT D'AFFICHAGE

(30) Priority: 30.01.2006 JP 2006021550; 27.04.2006 JP 2006124430; 27.04.2006 JP 2006124435; 27.04.2006 JP 2006124425
(43) Date of publication of application: 05.11.2008
(73) Proprietor: Kyocera Corporation, Kyoto-shi, Kyoto-fu 612-8501 (JP)
(72) Inventor: FURUTA, Takashi, Kanagawa (JP); FURUMATSU, Kouichirou, Kanagawa (JP); NAKAMURA, Tomoaki, Kanagawa (JP)
(74) Representative: Cloughley, Peter Andrew
(86) International application number: PCT/JP2007/051496
(87) International publication number: WO 2007/086579

(56) References cited:
- EP-A- 1 185 057
- WO-A-02/37809
- JP-A- 09 127 491
- JP-A- 2001 166 698
- JP-A- 2004 159 173
- JP-A- 2004 198 936
- JP-A- 2005 284 054

## Description

### TECHNICAL FIELD

The present invention relates to a display holder, a portable electronic apparatus, and an assembling method of the display holder, and particularly, to a display holder which prevents dust, etc. from adhering to a display device and holds the display device, a portable electronic apparatus on which the display device is mounted by the display holder, and an assembling method of the display holder.

### BACKGROUND ART

Among portable telephones, there is one in which a main display device and other relatively small sub-display devices are provided as display devices. These respective devices are disposed on the front and back surfaces of a housing of the portable telephone.

Since a display surface of the display device is a portion which user's eyes always reach, it is necessary to prevent entry of dust to an inner surface. Conventionally, there is provided a structure in which, in consideration of dust proofing to the display surface of such a display device, a dust sheet formed of sponge is provided at the periphery of the display device, and a gap is closed between the display device and the housing (for example, refer to Patent Document 1).

Further, a display holder holding a display device of a portable electronic apparatus is known conventionally. Among portable telephones which are portable electronic apparatuses, for example, there is one including two display devices of the main display device and the sub-display device as described above. The sub-display device is directly attached to an inner surface of an outer case of the housing. In order to prevent dust, etc. from adhering to a display surface of this sub-display device, the sub-display device is attached to the housing via a sheet formed of an elastic member, such as sponge.

That is, for example, dust, etc. is prevented from entering the display surface of the sub-display device inside the housing by pasting the sheet on the housing side in contact with the sub-display device composed of a liquid crystal display (LCD), and filling a gap created between the sub-display device and the housing.

Further, fixation of the sub-display device to the housing is performed, for example, by fixing to the housing, for example, a plastic holder which is mounted so as to surround the periphery of a glass surface forming the display surface of the sub-display device to hold the sub-display device, i.e., a plastic holder holding the sub-display device.

As one which mounts the display device on the housing, using such a holder holding the display device, for example, there is an "LCD display device attachment structure" (refer to Patent Document 1).
Patent Document 1: Japanese Unexamined Patent Application Publication No. 9-283950

JP 2001-166698 discloses a dustproof structure having a liquid crystal frame which comes into tight contact with the surfaces other than a display surface of a liquid crystal display and a front case which covers the display surface. The inside surfaces of the front case and the liquid crystal frame are in tight contact with each other. A slit for holding a flexible substrate is formed in the liquid crystal frame and a projecting part is formed above the display surface of the liquid crystal display. The liquid crystal display is fixed by the projecting part. The flexible substrate is used for connection of the liquid crystal display and the substrate. The liquid crystal frame is formed of a high-elasticity resin.

EP 1185057 discloses a connection structure for connecting a display module and a printed substrate. The connection structure is appropriate for use in mass production of electronic devices such as a cellular phone. A liquid crystal module is provided with a pin electrode on an external connection terminal of its COF (Chip On Film), and fixed to a housing in a folded state with respective rear surfaces of the COF and a liquid crystal panel facing each other. A holding member for engaging the printed substrate and holding the printed substrate is formed on the housing. When the holding member engages the printed substrate, the liquid crystal module is fixed to the printed substrate, and at the same time, the pin electrode of the COF and a through hole electrode of the printed substrate are electrically connected.

### DISCLOSURE OF THE INVENTION

### PROBLEM TO BE SOLVED BY THE INVENTION

However, in the conventional structure, in order to provide the dust sheet, the portable electronic apparatus becomes thick and the number of parts increases. Therefore, there is a problem in that these move against miniaturization and weight saving.

Further, in the conventional structure on which the display device is mounted, a separate member (for example, sheet made of an elastic member) for protecting the display surface of the display device in a case where a shock, etc. is applied is needed in addition to the plastic holder holding the display device. Therefore, it could not be avoided that the cost increases.

Further, in the conventional structure on which the display device is mounted, in order to enhance the dust-proof effect, the sheet as mentioned above, which is formed of an elastic member, is needed, and thus, the number of parts can be reduced.

Thus, the invention provides a display holder and a portable electronic apparatus capable of reducing the number of parts and making a portable electronic apparatus thin and small.

Moreover, the invention provide a display holder, a portable electronic apparatus, and an assembling method of the display holder, capable of providing both a function to protect a display surface of the display device, and a function to hold the display device, without necessitating separate members which causes an increase in cost.

Moreover, the invention provides a display holder and a portable electronic apparatus, capable of reducing the number of parts while enhancing a dust-proof effect more than ever before.

### MEANS FOR SOLVING THE PROBLEM

In order to solve the above problems, the invention provides a display holder as defined in claim 1.

Preferably, there is provided a portable electronic apparatus comprising a display device, a housing, and the display holder fixed within the housing in a state where the display device is held.

According to another aspect of the invention, there is provided a display holder as defined in claim 6.

### ADVANTAGE OF THE INVENTION

According to the invention, since it becomes possible to prevent entry of dust into a display surface of a display device, the number of parts can be reduced, and a portable electronic apparatus can be made thin and small.

According to the invention, it is possible to provide both a function to protect the display surface of the display device, and a function to hold the display device, without necessitating separate members which causes an increase in cost.

According to the invention, it is possible to enhance a dust-proof effect while reducing the number of parts.

Further, according to the invention, it is possible to mold the display holder by dies without causing an increase in production cost even if an elastic material is used as a molding material.

### BRIEF DESCRIPTION OF THE DRAWINGS

Fig. 1 is a perspective view of a foldable portable telephone in a first embodiment of the invention.
Fig. 2 is an exploded view of the configuration of a first housing in the first embodiment of the invention.
Fig. 3 is a perspective view of a hinge member in the first embodiment of the invention.
Fig. 4 is a plan view of a sheet metal member in the first embodiment of the invention.
Fig. 5 is a perspective view of the configuration of a sub-display unit in the first embodiment of the invention.
Fig. 6A is a view showing a front surface of a holder in the first embodiment of the invention.
Fig. 6B is a side view of the holder in the first embodiment of the invention.
Fig. 6C is a rear view of the holder in the first embodiment of the invention
Fig. 7 is a sectional view taken along a line A-A of Fig. 6A in the first embodiment of the invention.
Fig. 8 is a side view showing an assembling situation of a sub-display device to the holder in the first embodiment of the invention.
Fig. 9 is a perspective view showing an assembling situation of the sub-display unit to the sheet metal member in the first embodiment of the invention.
Fig. 10 is a top view of a first housing in the first embodiment of the invention.
Fig. 11A is a sectional view taken along a line B-B of Fig. 10.
Fig. 11B is an enlarged sectional view of a C portion of Fig. 11A.
Fig. 12A is a perspective view of the front side of a holder according to a second embodiment of the invention.
Fig. 12B is a perspective view of the back side of the holder according to the second embodiment of the invention.
Fig. 13A is a sectional view taken along a ling A-A, showing the holder of Fig. 12A in detail.
Fig. 13B is a sectional view taken along a ling B-B, showing the holder of Fig. 12A in detail.
Fig. 14A is a front view of a display device held by the holder of Figs. 12A and 12B.
Fig. 14B is a perspective view of the display device held by the holder of Figs. 12A and 12B.
Fig. 15A is a perspective view of the front side, showing a state where the display device of Figs. 14A and 14B is mounted on the holder of Figs. 12A and 12B.
Fig. 15B is a perspective view of the back side, showing a state where the display device of Figs. 14A and 14B is mounted on the holder of Figs. 12A and 12B.
Fig. 16A is an explanatory view by the cross-section of Fig. 15A, showing the holder in a display device mounting state.
Fig. 16B is an enlarged explanatory view of holding walls of Fig. 16A, showing a holder according to a third embodiment in a display device mounting state.
Fig. 17 is a perspective view of a portable electronic apparatus on which the holder holding the display device of Figs. 12A and 12B is mounted.

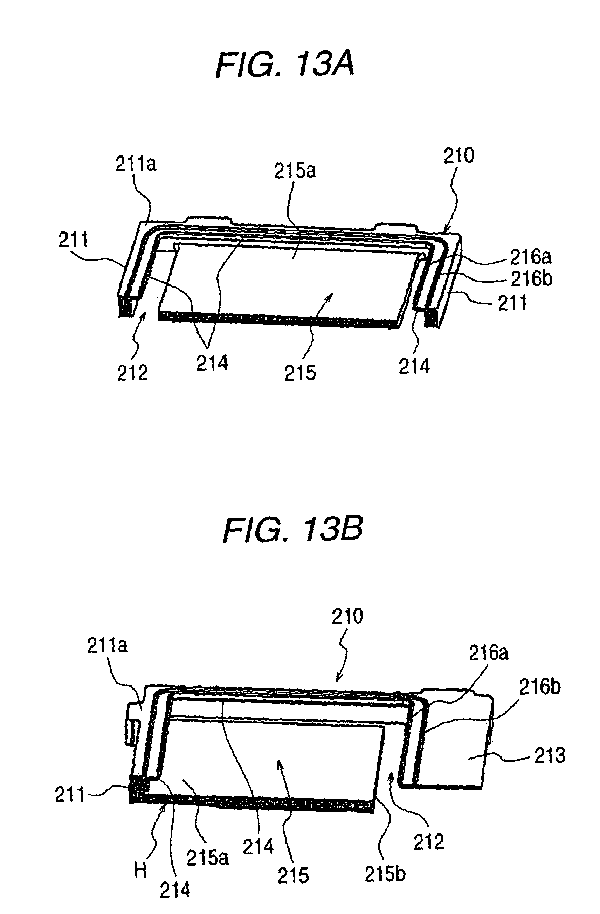

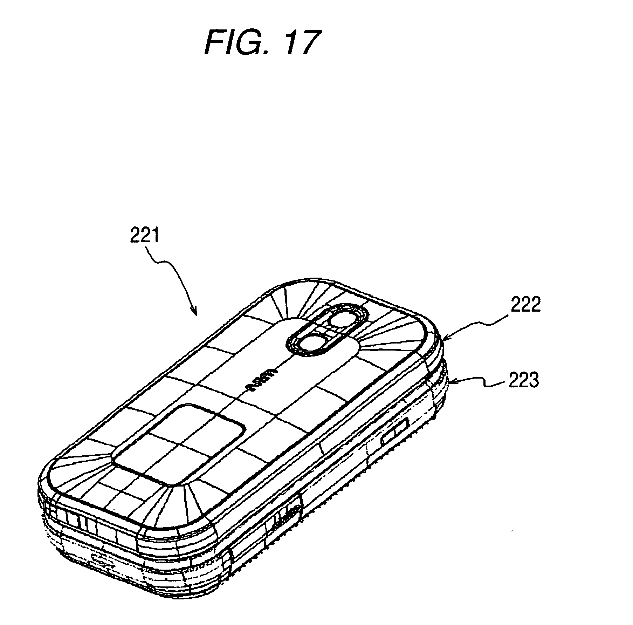

Fig. 13 is an exploded configuration diagram of the portable electronic apparatus of Fig. 17.

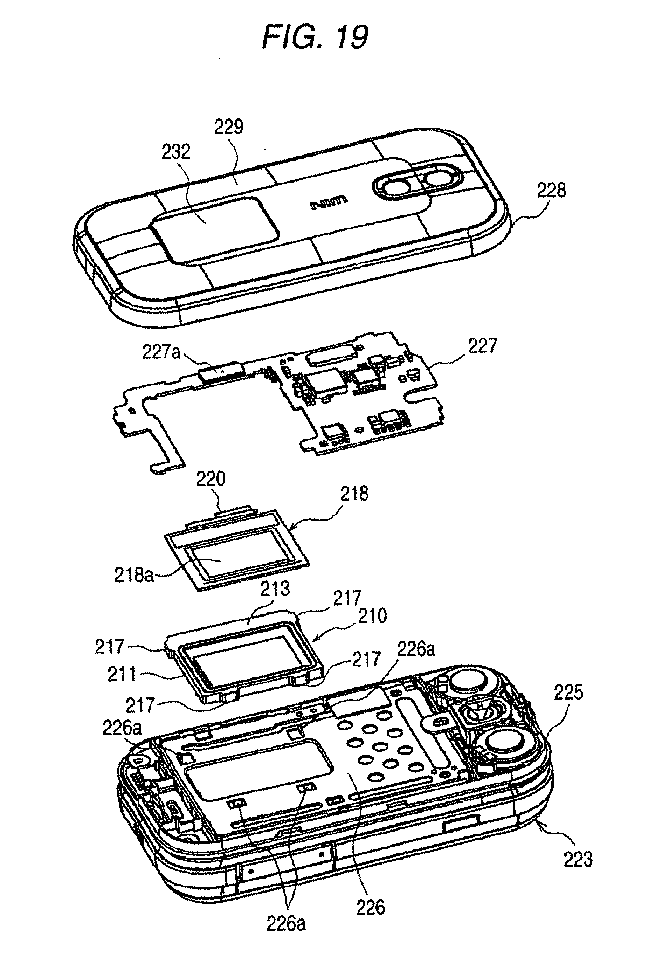

Fig. 19 is an exploded configuration diagram of the first housing after auxiliary sheet metal mounting.

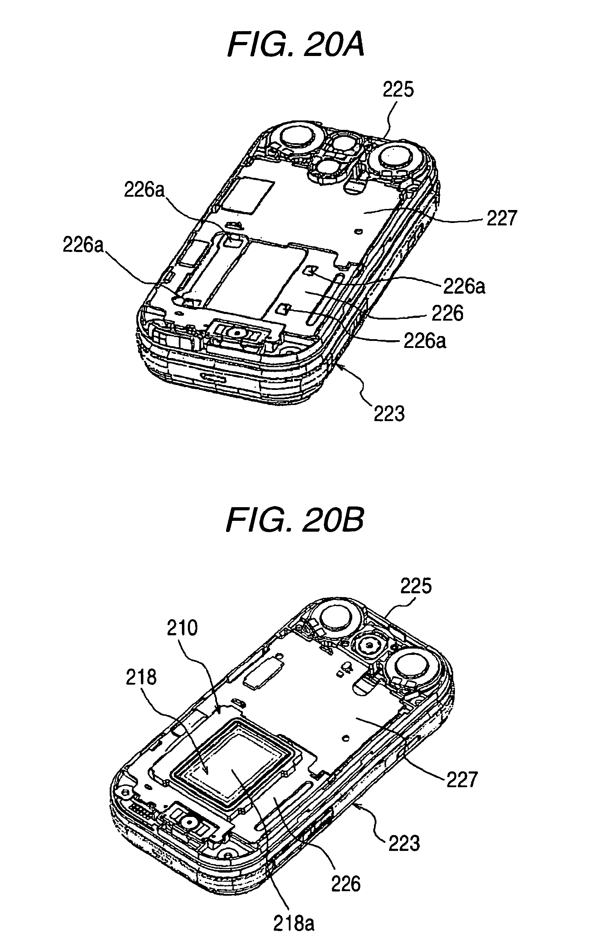

Fig. 20A is a perspective view before attachment of the holder, illustrating mounting of the holder.
Fig. 20B is a perspective view after attachment of the holder, illustrating mounting of the holder.

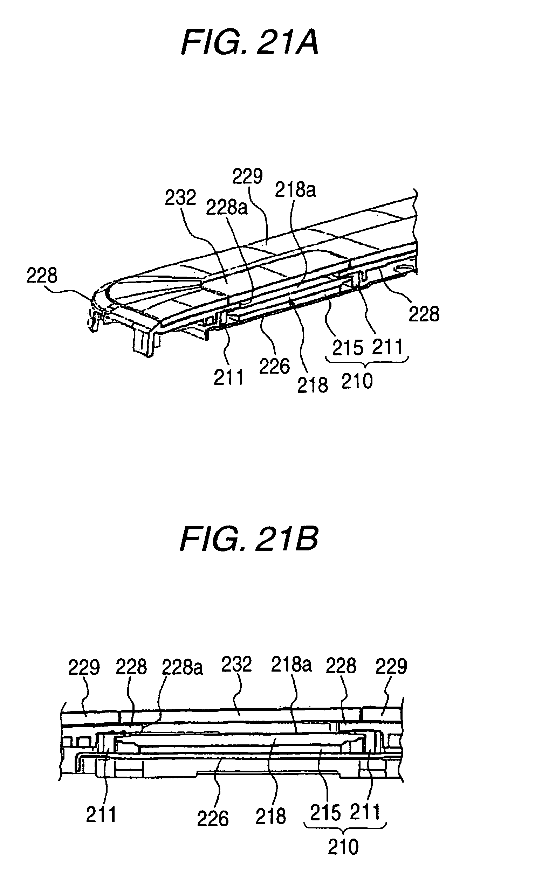

Fig. 21A is a perspective sectional view, showing a case mounting state of the holder holding the display device:
Fig. 21B is an exploded sectional view, showing a case mounting state of the holder holding the display device.

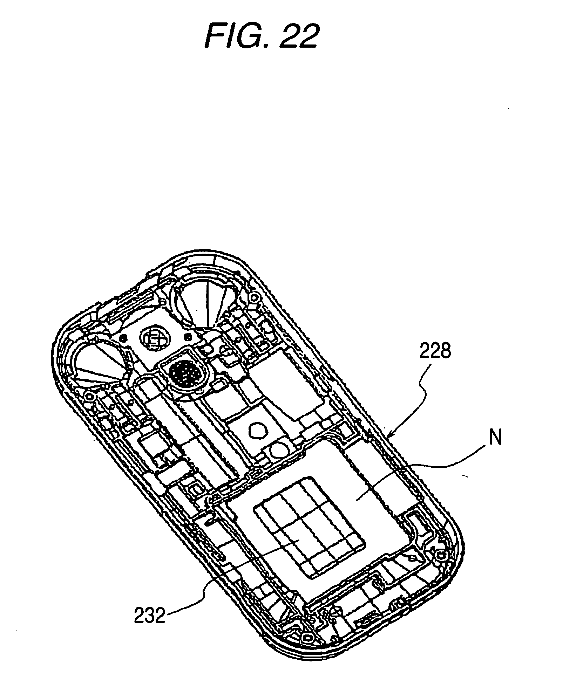

Fig. 22 is a perspective view when an upper case of the first housing is seen from the inner side.

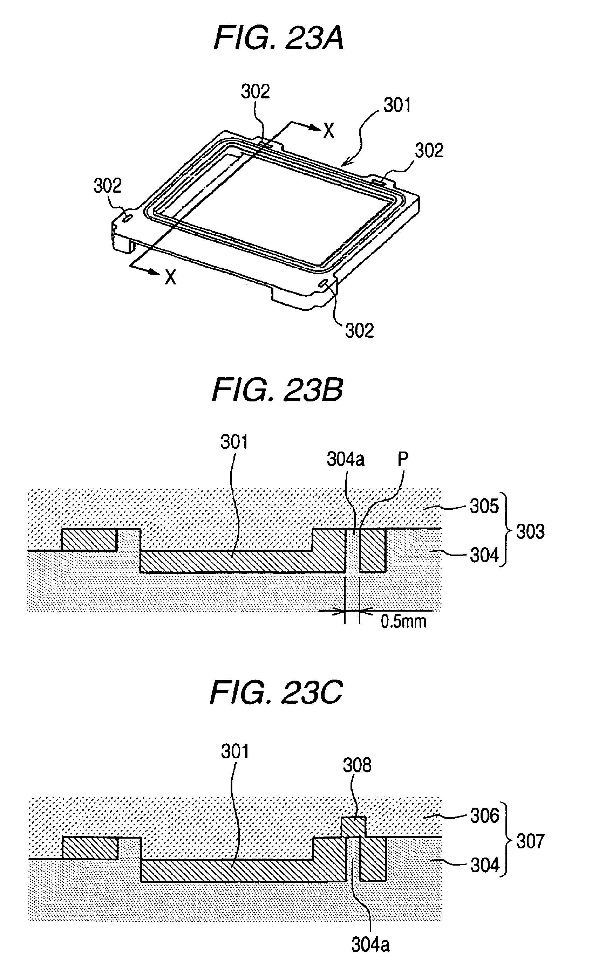

Fig. 23A is a perspective view of a holder made of an elastic member in which a narrow hole is formed.
Fig. 23B is a cross-sectional explanatory view at the time of formation of the holder of Fig. 23A by dies for forming the holder (step 1).
Fig. 23C is a cross-sectional explanatory view at the time of formation of the holder of Fig. 23A by dies for forming the holder (step 2).

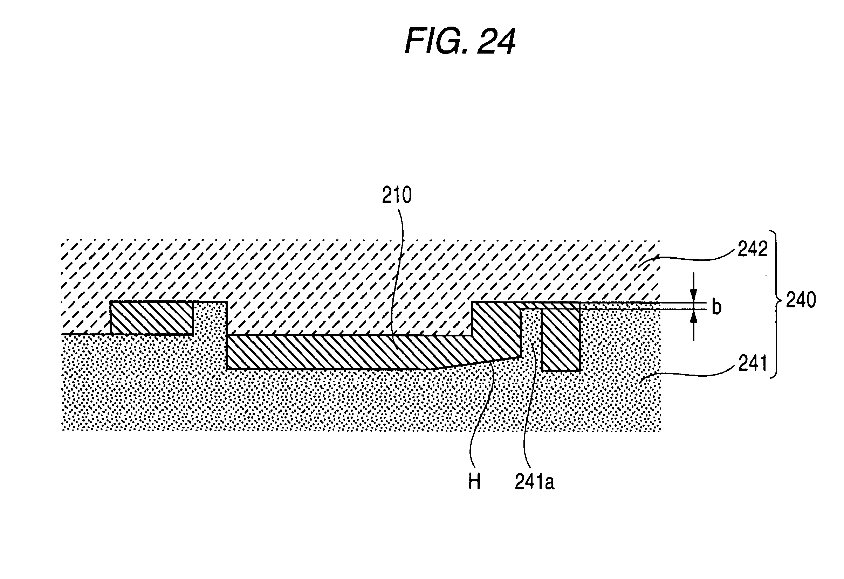

Fig. 24 is a cross-sectional explanatory view when a holder according to a fourth embodiment is formed by dies for forming the holder.

### REFERENCE NUMERALS

1: PORTABLE TELEPHONE
6: SECOND HOUSING
7: MAIN DISPLAY UNIT
8: SUB-DISPLAY UNIT
10: FIRST HOUSING
14: SHEET METAL MEMBER
30: DISPLAY SURFACE
31: HOLDER (HOLDING PART)
32a: FIXING CLAW
32b: FIX1NG CLAW
32c: FIXING CLAW
32d: FIXING CLAW
33: OPENING
40: FRAME PORTION
41: HOLDING PORTION
47a: FIXING HOLE (LOCKING PORTION)
47b: FIXING HOLE (LOCKING PORTION)
47c: FIXING HOLE (LOCKING PORTION)
47d: FIXING HOLE (LOCKING PORTION)
50: OPENING (OTHER OPENING)
52: INSERTION PORTION
55: GUIDE PORTION
60: FRONT SURFACE
61: SIDE SURFACE
62: BACK SURFACES (BACK SURFACE)
90: MAIN DISPLAY DEVICE (SECOND DISPLAY DEVICE)
91: SUB-DISPLAY DEVICE (DISPLAY DEVICE)
210: HOLDER
211: FRAME PORTION
211 a: FRONT SURFACE
211b: BACK SURFACE
212: OPINING
213: COVER PORTION
214: HOLDING WALL
214a: FLEXIBLE PORTION
215: TONGUE PORTION
215a: BASE
215b: FREE END
216a, 216b: PROJECTION STRIP
217: CLAW RECEIVING PORTION (LOCKING PORTION)
218: DISPLAY DEVICE
218a: DISPLAY SURFACE
218b: BACK SURFACE
219: EXTERNAL WIRING CONNECTING PORTION
220: FPC
221: PORTABLE TELEPHONE
222: FIRST HOUSING
223: SECOND HOUSING
224: MAIN DISPLAY DEVICE
225: LOWER CASE
226: REINFORCING SHEET METAL
226a: CLAW
227: MAIN SUBSTRATE
228: UPPER CASE
228a, 229a: OPENING
229: ORNAMENTAL PANEL
231: HINGE PORTION
232: WINDOW PANEL
233: BATTERY CASE
234a, 235a: HINGE RECEIVING PORTION
234: LOWER CASE
235: UPPER CASE
241 a: NARROW HOLE FORMING PORTION
241: CORE-SIDE DIE
242: CAVITY-SIDE DIE
a: HEIGHT
b: GAP
p: DIE MATING SURFACE

### PREFERRED EMBODIMENTS FOR CARRYING OUT THE INVENTION

Hereinafter, best modes for carrying out the invention will be described with reference to the drawings.

### (First Embodiment)

First, a first embodiment of the invention will be described on the basis of the drawings.

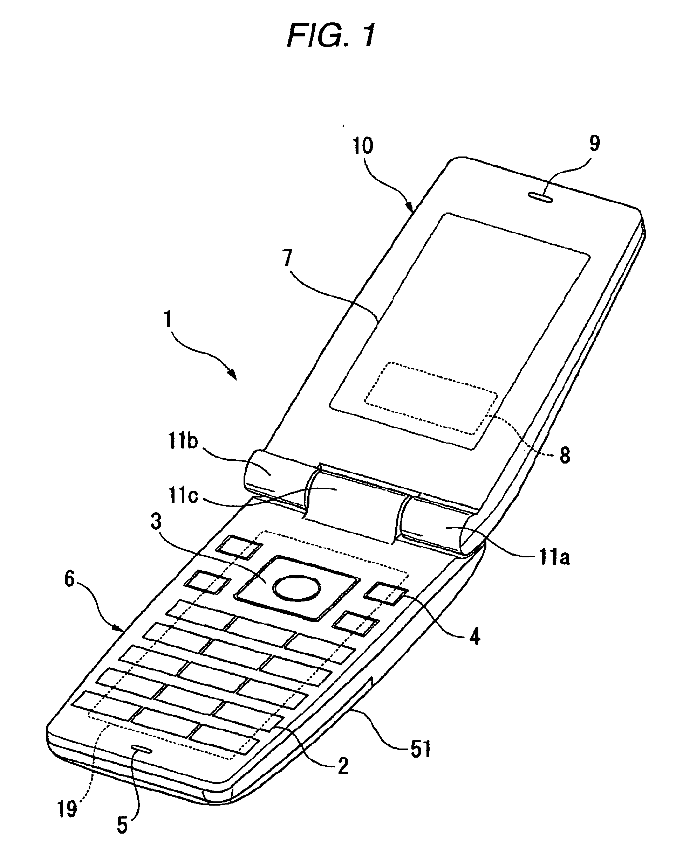

As shown in Fig. 1, a portable telephone 1 as a portable electronic apparatus is a so-called foldable one in which a first housing 10 having a main display unit 7 and a sub-display unit 8 on the front and back surfaces thereof is openably and closably journalled to a second housing 6 having a plurality of operation keys, such as ten keys 2, cursor keys 3, or function keys 4 via hinge portions 11a, 11b, and 11c provided at a base thereof.

A second circuit board 19 having a control unit (CPU: Central Processing Unit), etc. is built in the second housing 6, and a microphone 5 for a telephone call is provided at the distal end of the second housing. Further, a battery 51 electrically connected with the second circuit board 19 is detachably provided on the surface of the second housing 6 opposite the surface where a plurality of operation keys are exposed. Further, a speaker 9 for a telephone call is provided at the distal end of the first housing 10 corresponding to the microphone 5 of the second housing 6.

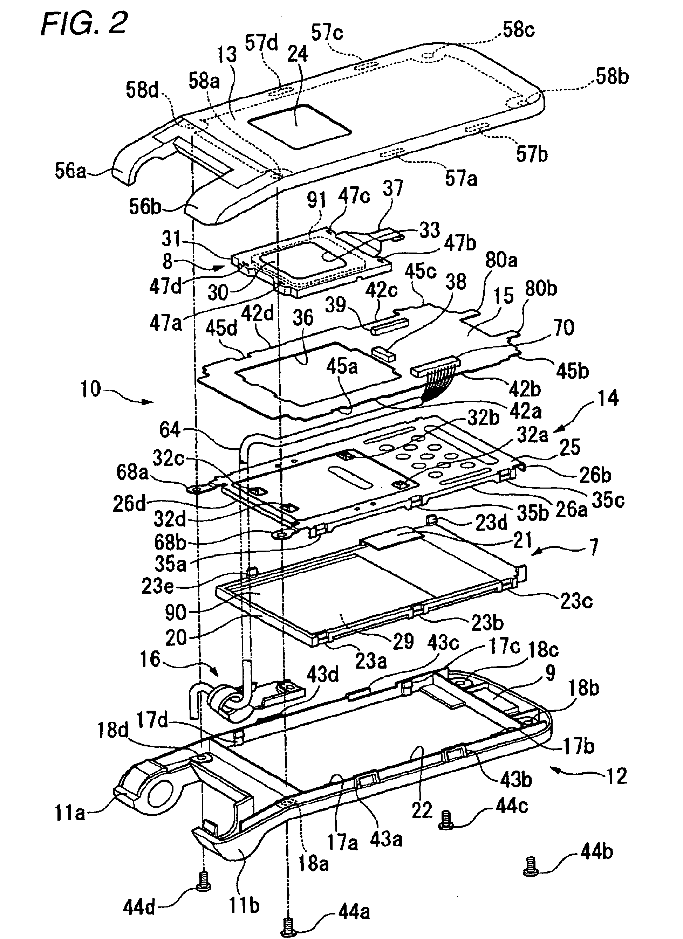

As shown in Fig. 2, the first housing 10 is provided in a case 12 made of resin formed in the shape of a frame so that a cover 13 made of resin covers a case 12, and the case 12 and the cover 13 are configured so as to be fastened by screws 44a, 44b, 44c, and 44d.

Between the case 12 and the cover 13, the main display unit 7 is provided so as to be exposed to the case 12. A sheet metal member 14 for reinforcement of the main display unit 7 is provided on the back surface of the main display unit 7.

Moreover, on the sheet metal member 14, the sub-display unit 8 is provided so as to be exposed to the cover 13, and a first circuit board 15 is provided so as to surround the periphery of the sub-display unit 8.

An opening 22 is provided in the portion of the case 12 corresponding to a display surface 29 of the main display unit 7. The speaker 9 for a telephone call is built in on the side of the opening 22 opposite the hinge portions 11a and 11b.

Engaging claws 17a, 17b, 17c, and 17d which are engaged with the first circuit board 15 are provided at both side edges of the opening 22 of the case 12. The engaging claws 17a, 17b, 17c, and 17d fit to and fix the main display unit 7, the sheet metal member 14, and the first circuit board 15 in a state where they are stacked in the opening 22.

Further, salient portions 43a, 43b, 43c, and 43d which are engaged with the cover 13 are provided on both sides of the opening 22, and the respective salient portions 43a, 43b, 43c, and 43d are disposed closer to the center than the respective engaging claws 17a, 17b, 17c, and 17d.

An engaging portion for being engaged with the first circuit board 15 is formed on the side (inside) which orients the opening 22 at the distal ends of the salient portions 43a, 43b, 43c, and 43d, and a recessed portion is formed on the side (outside) which orients the outside of the opening 22.

Screw holes 18a, 18b, 18c, and 18d are provided at four corners of the case 12.

The hinge portions 11 a and 11b journalled to the second housing 6 protrude and are provided on both sides of a proximal end of the case 12, and a hinge member 16 is built in one of the hinge portions 11a and 11b.

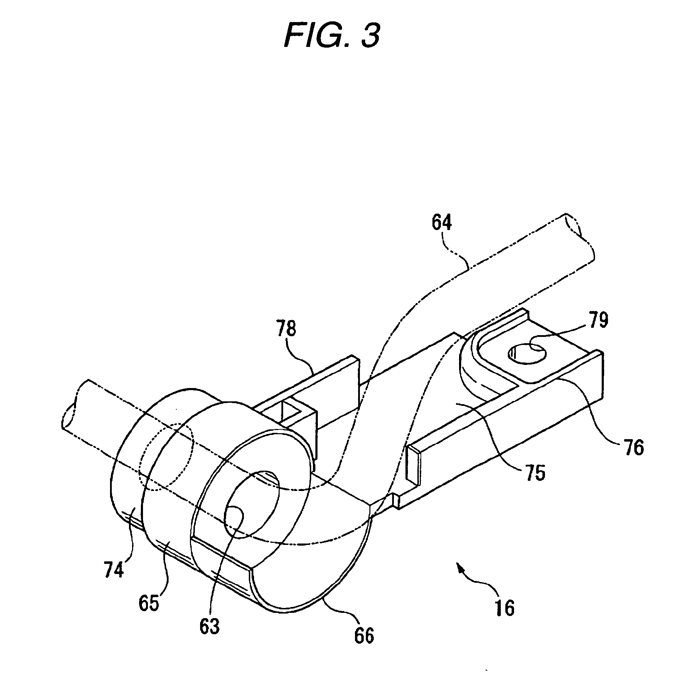

As shown in detail in Fig. 3, the hinge member 16 is a metallic member, and a coaxial cable 64 which are connected to both the first circuit board 15 and the second circuit board 19 is inserted into the hinge member.

The hinge member 16 is provided with a cylindrical portion 65, and an extending portion 66 which extends axially from one end of the cylindrical portion 65 along the outer periphery thereof, and a tongue piece 75 is provided so as to protrude from one side of the extending portion 66.

A rotating shaft portion 74 which is inserted into and rotatably engaged with the hinge portion 11c is provided on the other side of the cylindrical portion 65, i.e., on the side of the hinge portion 11c of the second housing 6. A through hole 63 is provided over the cylindrical portion 65 and the rotating shaft portion 74, and the coaxial cable 64 is able to be inserted through the insertion hole 63.

A screw hole 79 is formed at the distal end of the tongue piece 75, and a rib 76 rises from the tongue piece 75 so as to surround the periphery of the screw hole 79. Further, the rib 76 protrudes along one side of the tongue piece 75.

Moreover, a rib 78 is provided on the other side of the tongue piece 75 so as to stretch between the tongue piece 75 and the cylindrical portion 65. The coaxial cable 64 is arranged between the rib 76 and the rib 78 and in the extending portion 66.

The main display unit 7 is constituted by a main display device 90 which is a liquid crystal display of the structure of being sandwiched by glass substrates, and a holder 20 made of resin in the shape of a frame provided so as to surround the periphery of the main display device 90, and the display surface 29 of the main display device 90 is arranged so as to be exposed to the opening 22 of the case 12.
A flexible substrate (FPC: Flexible Printed Circuit) 21 connected with the first circuit board 15 is connected to one side of the main display unit 7. Further, engaging claws 23a, 23b, 23c, 23d, and 23e which are engaged with the sheet metal member 14 disposed on the back surface of the main display unit 7 are provided on both sides of the holder 20.

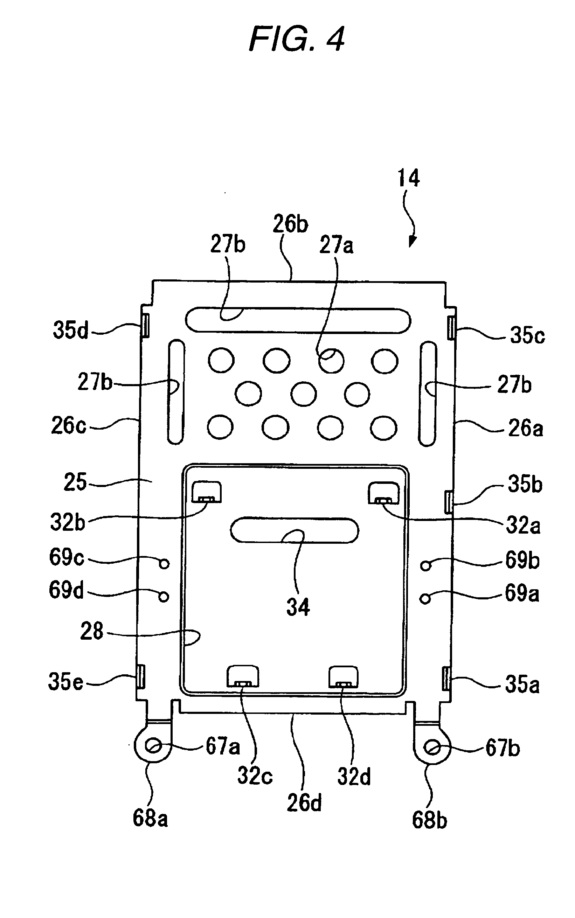

As shown in detail in Fig. 4 the sheet metal member 14 is a reinforcing member which prevents twist, etc. of the main display unit 7, has a rectangular outer shape, and is formed from one sheet metal such that side walls 26a, 26b, 26c, and 26d are bent perpendicularly from the rectangular planar portion 25. Holes 27a and 27b for weight saving are provided on the distal side of the planar portion 25, and a housing recess 28 which houses the sub-display unit 8 is provided on the proximal side of the planar portion.

Fixing claws 32a, 32b, 32c and 32d for fixing the sub-display unit S are provided at both corners on the distal side and in the vicinity of the center on the proximal side, of the housing recess 28, by bending sheet metal, and a hole 34 for weight saving is provided closer to almost the distal side than the center of the housing recess 28.

On the planar portion 25 close to both sides of the housing recess 28, four salient portions 69a, 69b, 69c, and 69d are provided. The salient portions 69a, 69b, 69c, and 69d abut on a reference potential pattern provided on the first circuit board 15 so that they can be electrically connected to the potential pattern.

Further, protruding portions 68a and 68b which protrude from the planar portion 25 are provided on both sides of a proximal end of the planar portion 25.

The distal ends of the protruding portions 68a and 68b respectively have circular shapes in plan view, and screw holes 67a and 67b are respectively formed almost in the centers of the circular shapes in plan view.

At the side walls 26a, 26b, 26c, and 26d of the sheet metal member 14, Engaging holes 35a, 35b, 35c, 35d, and 35e are respectively provided in the positions corresponding to the engaging claws 23a, 23b, 23c, 23d, and 23e provided in the holder 20 of the main display unit 7.

The first circuit board 15 performs power feeding, etc. to the main display unit 7 and the sub-display unit 8. On the proximal side of the first circuit board 15, an opening 36 whose portion corresponding to the outer shape of the sub-display unit 8 is opened is provided, and on the distal side of the first circuit board, protruding portions 80a and 80b which protrude toward the direction opposite to the hinge portions 11a and 11b of the case 12 are provided.

On the side of the protruding portions 80a and 80b of the opening 36, a connector 38 which connects the other end of a flexible substrate (FPC) 37 whose one end is connected to the sub-display unit 8 is provided.

Further, a connector 39 which is connected with the other end of the flexible substrate 21 is provided in a position corresponding to the flexible substrate 21 whose one end is connected to the main display unit 7.

Moreover, a connector 70 which is connected with the coaxial cable 64 is provided on the front right side of the opening 36.

The coaxial cable 64 is constituted by a plurality of very fine cables called a thin coaxial cable, and a reference potential line part of which is connected to the reference potential of the second circuit board 19 is included in at least one of these cables.

Further, the other end of the reference potential line is connected to the first circuit board 15 via the connector 70, and thereby, the reference potential line eclectically connects the reference potential between the first circuit board 15 and the second circuit board 19. Lines which supply signals for operation, display, voices, etc. are also included in the coaxial cable 64.

Further, on both sides of the first circuit board 15, cutouts 42a, 42b, 42c, and 42d are provided in positions corresponding to the salient portions 43a, 43b, 43c, and 43d of the case 12.

The cutouts 42a, 42b, 42c, and 42d are locked to engaging portions inside the salient portions 43a, 43b, 43c, and 43d of the case 12.

Here, the cutout 42c corresponding to the arrangement position of the flexible substrate 21 of the main display unit 7 has such a size that the flexible substrate 21 can be arranged.

At four corners of the first circuit board 15, cutouts 45a, 45b, 45c, and 45d are provided in positions corresponding to the engaging claws 17a, 17b, 17c, and 17d of the case 12 so that the first circuit board 15 and the case 12 are engaged with each other.

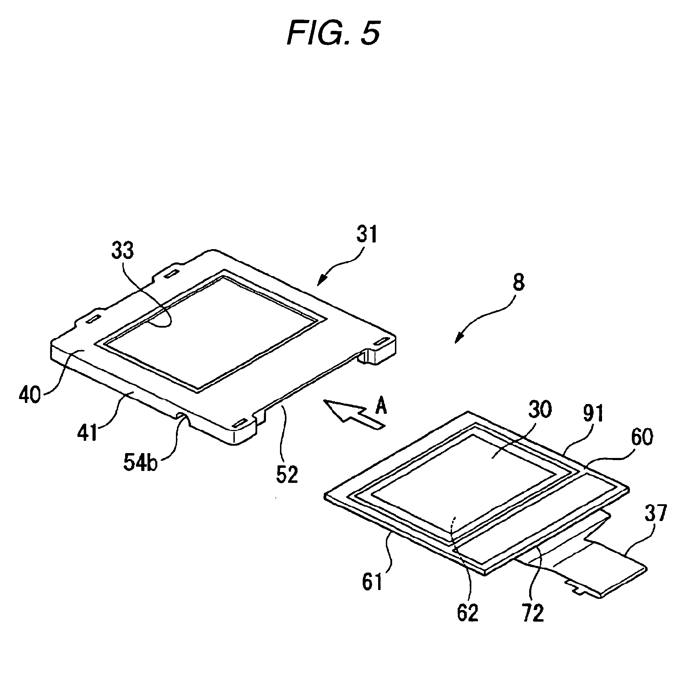

As shown in Fig. 5 the sub-display unit 8 is constituted by a sub-display device 91 which is a liquid crystal display of the structure of being sandwiched by glass substrates, and a holder 31 made of rubber formed so as to cover the sub-display device 91.

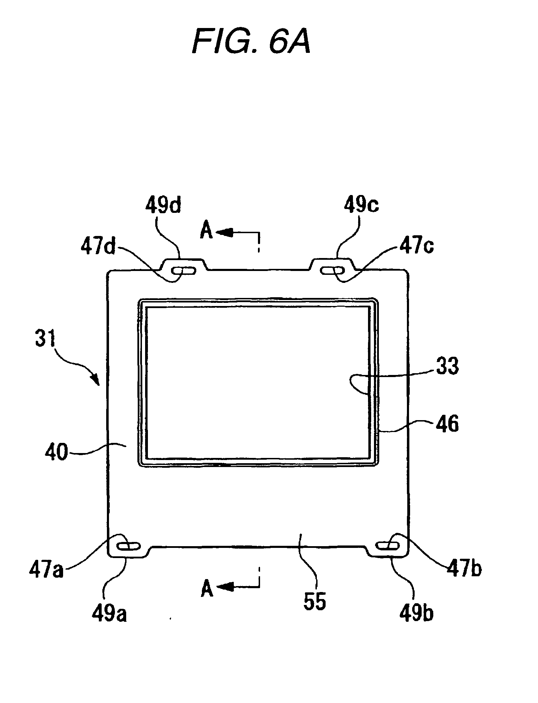

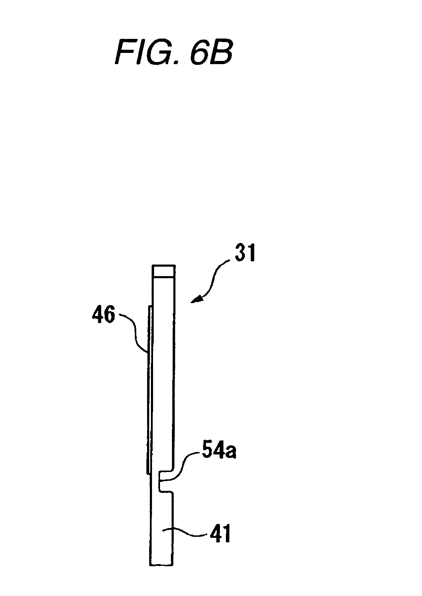

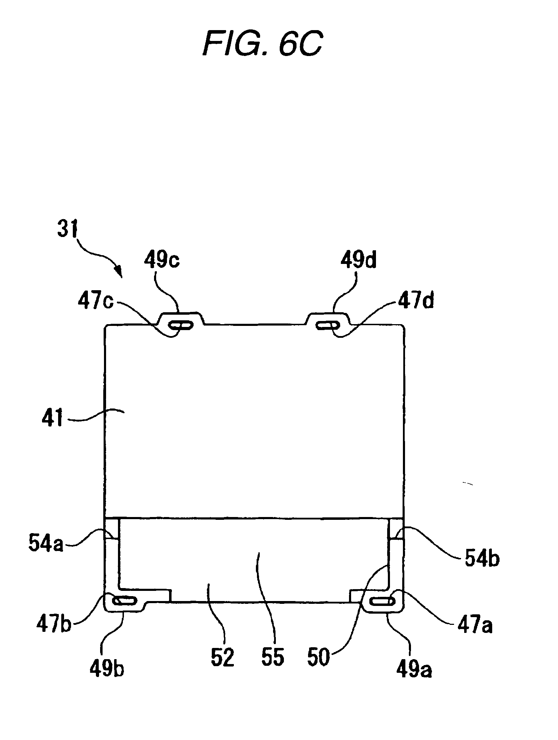

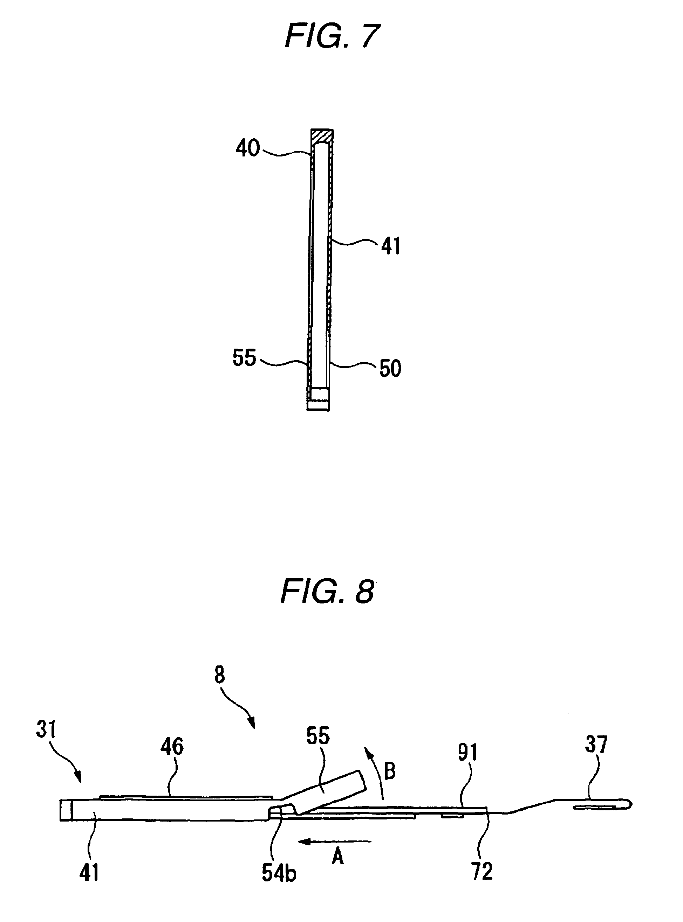

As shown in Fig. 6A, Fig. 6B, Fig. 6C, and Fig. 7, the holder 31 is one in which a holding portion 41 which covers a side surface 61 and a back surface 62 of the sub-display display device 91 is provided in and integrally molded with a frame portion 40 in which an opening 33 is provided in a portion corresponding to a display surface 30 on a front surface 60 of the sub-display device 91.

A rib portion 46 for sealing a gap between the holder 31 and the inner wall of the cover 13 is provided at the peripheral edge of the opening 33 of the frame portion 40.

On the distal side and proximal side of the holder 31, fixing holes 47a, 47b, 47c, and 47d are formed through the holding portion 41 in positions corresponding to the fixing claws 32a, 32b, 32c, and 32d provided in the sheet metal member 14.

Around the fixing holes (locking portions) 47a, 47b, 47c, and 47d provided in the holding portion 41, protruding portions 49a, 49b, 49c, and 49d are formed so as to surround the fixing holes 47a, 47b, 47c, and 47d.

On the side of the holding portion 41 where the sub-display device 91 is received, an insertion portion 52 is formed so as to cut out the holding portion 41. The insertion portion 52 has such a shape that the flexible substrate 37 connected to the sub-display device 91 can be disposed.
Further, an opening 50 is formed on the side of the holding portion 41 facing the back surface 62 so as to be connected to the insertion portion 52.
Cutouts 54a and 54b are formed in the holding portion 41 located on both sides of the opening 50, and the frame portion 40 which covers the position which faces the opening 50 becomes tiltable by the cutouts 54a and 54b. The frame portion 40 which covers the position which faces the opening 50 is constituted as a guide portion 55.

Accordingly, as shown in Fig. 8, in a case where the sub-display device 91 is set in the holder 31, the sub-display device 91 is inserted toward the insertion portion 52 (the direction of an arrow A) of the holder 31 from the side opposite to the side where the flexible substrate 37 of the sub-display device 91 is connected, in a state where the guide portion 55 of the holder 31 is tilted upward (the direction of an arrow B) of the frame portion 40 about the cutouts 54a and 54b.

Here, the sub-display device 91 is smoothly inserted while being guided along the guide portion 55.

After the sub-display device 91 is set in the holder 31, the guide portion 55 returns to a horizontal state under the action of a restoring force, and the whole front surface 60 of the sub-display device 91 except the display surface 30 is covered.

In this case, the whole side surface 61 of the sub-display device 91 is also covered by the holding portion 41 except for the portion to which the flexible substrate 37 is connected. That is, the periphery of a connecting portion 72 between the sub-display device 91 and the flexible substrate 37 is covered by the holding portion 41.

Thereby, almost the whole periphery of the sub-display device 91, and the back surface 62 of the sub-display device 91 are covered by the holding portion 41, so that the light from the sub-display device 91 will not leak to the outside from other than an actual display surface.

In addition, it is desirable that the color of the holder 31 is black which hardly transmits light in consideration of leakage of light to the periphery of the display surface 30 of the sub-display device 91.

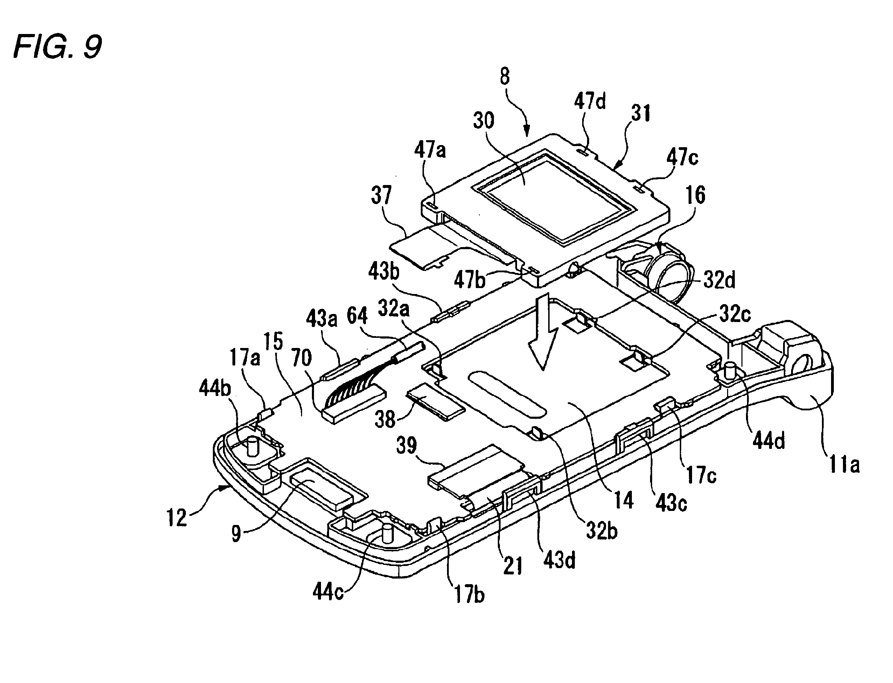

As shown in Fig. 9, the display unit 8 in which the sub-display device 91 is set in the holder 31 is set toward the sheet metal member 14 (arrow C), and the fixing holes 47a, 47b, 47c, and 47d of the holder 31 are press-fitted and fixed to the fixing claws 32a, 32b, 32c, and 32d, respectively, of the sheet metal member 14.

As shown in Fig. 2, the portion of the cover 13 corresponding to the display surface 30 of the sub-display device 91 is provided with a window 24.

On both sides of a proximal end of the cover 13, hinge covers 56a and 56b which cover the hinge portions 11a and 11b of the case 12 are provided so as to protrude, and on both sides of the cover 13, engaging projections 57a, 57b, 57c, and 57d which are engaged with the salient portions 43a, 43b, 43c, and 43d are provided in positions corresponding to the salient portion 43a, 43b, 43c, and 43d of the case 12.

At four corners of the cover 13, screw bosses 58a, 58b, 58c, and 58d are provided in positions corresponding to the screws 44a, 44b, 44c, and 44d.

Thereby, the cover 13 is adapted to surely cover the top of the case 12 as the engaging projections 57a, 57b, 57c, and 57d are engaged with the salient portions 43a, 43b, 43c, and 43d of the case 12, and the screw bosses 58a, 58b, 58c and 58d are fastened to the case 12 by the screws 44a, 44b, 44c, and 44d.

Further, the main display unit 7 is engaged and integrated with the sheet metal member 14 by the engaging holes 35a, 35b, 35c, 35d, and 35e provided in the side walls 26a, 26b, 26c, and 26d of the sheet metal member 14, and by the engaging claws 23a, 23e, 23d, and 23e provided in the holder 20 of the main display unit 7.

Further, the first circuit board 15 is covered on the integrated main display unit 7 and sheet metal member 14, and the main display unit 7, the sheet metal member 14, and, and the first circuit board 15 are fitted into and fixed to the opening 22 of the case 12 in a stacked state by the cutouts 45a, 45b, and 45c of the first circuit board 15 and the engaging claws 17a, 17b, 17c, and 17d of the case 12.

Also, the protruding portions 68a and 68a provided on both sides of a proximal end of the sheet metal member 14, and the expending portion 66 of the hinge member 16 along with the case 12 and the cover 13 are fastened by screws 44a and 44d, and the sheet metal member 14 and the hinge member 16 which are electrically abutted on the reference potential pattern of the first circuit board 15 are electrically connected to each other.

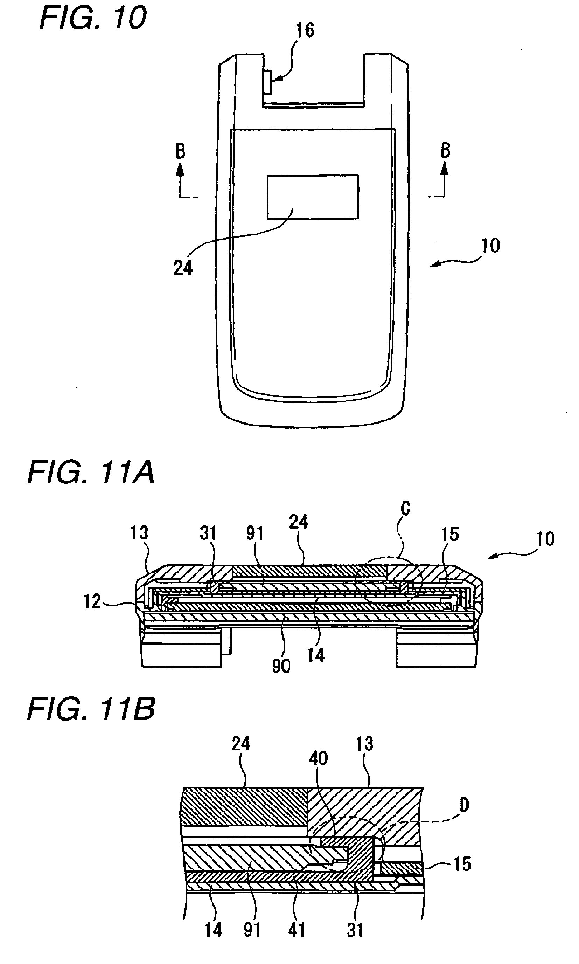

Accordingly, as shown in Fig. 10, Fig. 11A, and Fig. 11B, the sub-display unit 8 built in the first housing 10 is sandwiched between the cover 13 and the sheet metal member 14, and the cover 13 is fastened and fixed to the case 12 by the screws 44a, 44b, 44c, 44d, etc.

Thereby, the frame portion 40 of the holder 31 formed so as to cover the sub-display device 91 is pressed by the cover 13, and the frame portion 40 is compressed and deformed. That is, the gap between the front surface 60 of the sub-display device 91 and the cover 13 is sealed completely. (Refer to a portion D of Fig. 11B).

Accordingly, according to the above-mentioned embodiment, as the frame portion 40 of the holder 31 is compressed and deformed, the gap between the cover 13 and the sub-display device 91 can be sealed. Thereby, entering of dust from the gap between the cover 13 and the sub-display device 91 can be prevented. Therefore, there is an effect that the space between the cover 13 and the sub-display device 91 can be reduced.

Further, the opening 50 is provided on the side of the back surface 62 of the holding portion 41, the cutouts 54a and 54b are provided in the holding portion 41 located on both sides of the opening 50, and the guide-portion 55 is formed in the holder 31. Thereby, the sub-display device 91 can be slid and inserted along the guide portion 55. Therefore, there is an effect that assembling of the holder 31 into the sub-display device 91 becomes easy.

Moreover, the holding portion 41 of the holder 31 is formed with the insertion portion 52 in which the flexible substrate 37 connected to the sub-display device 91 can be disposed. This makes it possible to facilitate disposition of the flexible substrate 37. Therefore, there is an effect that disposition of the connector 39 on the first circuit board 15 becomes easy.

Also, since the holder 31 integrally molded with a member made of rubber covers almost the periphery edge of the display surface 30, the side surface 61, and the back surface 62, of the sub-display device 91, there is an effect that the shock caused by falling, etc. can be alleviated.

Further, the fixing claws 32a, 32b, 32c, and 32d are provided in the sheet metal member 14, the fixing holes 47a, 47b, 47c, and 47d are provided in the holder 31, and the holder 31 is press-fitted into the sheet metal member 14 to fix the sub-display unit 8. Thereby, the sub-display unit 8 can be positioned and fixed while the setting space thereof can be reduced. Therefore, there is an effect that the mounting area of the first circuit board 15 can be used effectively.

Moreover, processing for fixing the sub-display unit 8 to the first circuit board 15, the case 12, or the cover 13 becomes unnecessary at all.

However, a configuration in which a plurality of projections abutting on the side surface of the holding portion 41 mounted to the inside of the opening 36 of the first circuit board 15 are provided, and the holding portion 41 is sandwiched by these projections may be adopted.

Also, since the portion of the connecting portion 72 where the sub-indicated 91 and the flexible substrate 37 are connected on the side of the display surface 30 of is covered with the guide portion 55, a measure against static electricity from the outside can be taken.

Further, although the opening 50 into which the sub-display device 91 is inserted is provided in the holding portion 41, the flexible substrate (FPC) 37 is connected to the connector 38 using the opening 50, and protrudes with a certain degree of elasticity. Therefore, the sub-display device 91 does not slip out of the opening 50.

In addition the invention is not limited to the above-mentioned embodiment. Although the case where the main display device 90 and the sub-display device 91 is a liquid crystal display of the structure of being sandwiched by glass substrates have been described, it may be an EL (EL: Electro Luminescence) display.

Further, although the case where the holder 31 is used for the sub-display device 91 has been described in this embodiment, a holder with the same configuration as the holder 31 may be used for the main display device 90.

Moreover, although the foldable portable telephone has been described as an example in this embodiment, the invention can also be applied to a rotation-type or slide-type portable telephone, and a straight-type portable telephone.

Further, although the case where the flexible substrate (FPC) 21 is connected to the main display unit 7, and the flexible substrate (FPC) 37 is connected to the sub-display device 91 has been described in the above embodiment, the same effected can be exhibited even in a case where other flexible substrates (FFC: Flexible Flat Circuit), coaxial cables, and flat cables are connected instead of the flexible substrate (FPC) 21 and 37.

Moreover, although the case where the coaxial cable 64 are connected over the first circuit board 15 and the second circuit board 19 has been described in the above embodiment, the same effect can be exhibited even in a case where flexible substrates (FFC, FPC) and flat cables are connected instead of the coaxial cable 64.

Further, although the case where the holder 31 integrally molded with a member made of rubber is used for the sub-display device 91 has described in the above embodiment, a holder integrally molded from a material having elasticity, i.e., sponge, elastic resin, etc. can be used.

### (Second Embodiment)

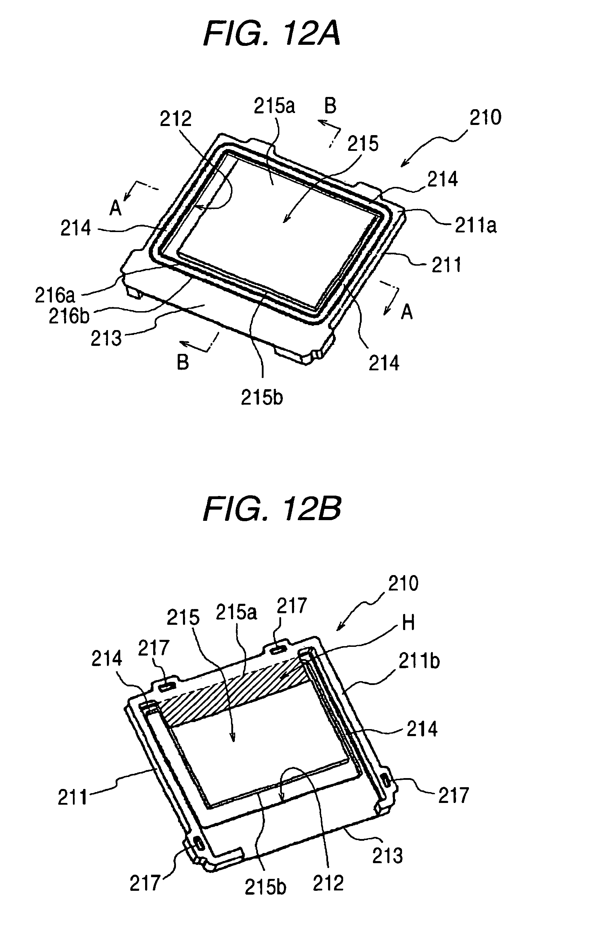

Figs. 12A and 12B show a holder according to a second embodiment of the invention, and Fig. 12A is a perspective view of surface side, and Fig. 12B is a perspective view of back side. Figs. 13A and 13B show the holder of Fig. 12A in detail, and Fig. 13A is a sectional view taken along an A-A line, and Fig. 13B is a sectional view taken along a B-B line.

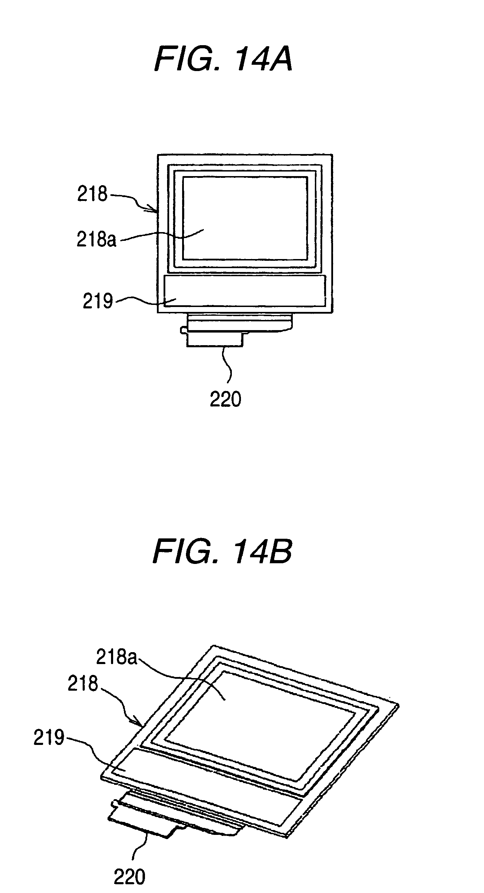

As shown in Figs. 12A and 12B, and Figs. 13A and 13B, a holder (display holder) 210 is composed of a rectangular frame-shaped body which has a rectangular opening 212 surrounded by a frame portion 211, and is formed by integrally molding an elastic member, such as rubber, sponge, or elastic resin. A thin plate-shaped display device 218 (refer to Fig. 14) to be described later is assembled into and held by the holder 210.

The frame portion 211 has at least a thickness (front and back surface width) which is equivalent to the thickness (wall thickness) of the display device 218, and has a cover portion 213 (refer to Fig. 12A) at one long side portion, and holding walls 214 (refer to Fig. 12A) at the other long side portion and both the short side portions, on the side of a front surface 211a (second surface), and has a tongue portion (back surface holding portion) 215 (refer to Fig. 12B) at the other long side portion, on the side of a back surface 211b (first surface). That is, the frame portion 211 has the holding walls 214 formed with the opening 212 which covers the peripheral edge of the display device 218 to be held, and exposes a display surface 218a. Further, the frame portion 211 is formed so as to have a wall-shaped side wall 211c which surrounds the outer periphery of the display device 218, and a central portion of a side wall on the side of the back surface the cover portion 213 is cut out in order to locate wiring member (refer to Fig. 12B).

The opening 212 has an opening shape corresponding to the shape of the display surface 218a, which allows the display surface 218a of the display device 218 to be exposed. The cover portion 213 is formed in a thin plate shape with such a wide width that an external wiring connecting portion 219 to be described later (refer to Figs. 12A and 12B) can be covered. The holding walls 214 are continuous with the cover portion 213, and are formed in an inward flange with respect to the side wall 211c of the frame portion 211 (refer to Figs. 12A and 12B and Figs. 13A and 13B).

The tongue portion 215 has a rectangular shape which expends from the other long side portion, and whose distal end reaches the vicinity of the cover portion 213, and three sides on the side of one long side portion (that is, cover portion 213) and on the side of both the short side portions are cut off separated from the frame portion 211 (refer to Figs. 12A and 12B and Figs. 13A and 13B). Further, the other long side portion H which becomes a connecting portion between the tongue portion 215 and the frame portion 211 is formed in a thin state compared with a portion other than the other long side portion H in the tongue portion 215 so as to be easily bent with respect to the frame portion 211 (refer to Figs. 12A and 12B, and Figs. 13A and 13B)

That is, the tongue portion 215 is continuously formed, with a connecting portion which is, continuous with a portion of, especially, the side wall 211c of the frame portion 211, is formed so as to face the first surface of the frame portion 211 with such a gap that it is cut off from the frame portion 211 except for the connecting portion and can hold the display device from the peripheral edges of the opening (holding walls 214), and with a shape located within the range of the opening 212, and is located on the back side of the display surface 218a. For this reason, one long side portion becomes a free end 215b with the other long side portion H as a base 215a. As a result, the free end 215b can be freely displaced toward the front surface 211a and toward the back surface 211b by bending the base 215a as a fulcrum.

As such, the frame portion 211 covers the peripheral edge of the held display device 218 on the side of the display surface 218a by the holding walls 214, and forms an opening 212 to which the display surface 218a is exposed. Thus, the frame portion is able to house and hold the display device 218 so as to sandwich it in a gap between the front surface 211a and the back surface 211b, i.e., between the cover portion 213 and the holding walls 214, and the tongue portion 215.

Further, in the holder 210, a projection strip (first projection strip) 216a and a projection strip (second projection strip) 216b which are formed so as to surround the opening 212 over its entire periphery, and are arranged double on the inner and outer sides with a predetermined spacing are provided on the side of the front surface 211 a of the frame portion 211 so as to project therefrom. The two projection strips 216a and 216b are made of an elastic member, respectively, and are formed in a thin yarn-like rib shape which projects toward the display device recognition direction of the frame portion 211. In the frame portion 211, claw receiving portions (locking portions) 217 are provided in a total of four places including two separated places of the other long side portion (that is, on the side of the base 215a of the tongue portion 215) and two separated places of one long side portion (that is, cover portion 213) of each short side portion. Each claw receiving portions 217 is formed in a long shape along each side opened toward the back surface 211 b (refer to Fig. 12B).

Although the holder 210 can be formed by, for example, die molding, a spot which becomes an undercut portion during molding can be reduced as much as possible. Thus, improvements in productivity can be achieved. That is, in the holder 210, the spot which becomes an undercut portion during molding is only the base 215a of the tongue portion 215, and three side portions including one long side portion (that is, cover portion 213) and both short side portions of the tongue portion 215 in which the holding walls 214 are formed become a space on the side of the back surface 211b (Figs. 12A and 12B, and Figs. 13A and 13B).

Further, since the tongue portion 215 is located within the range of the opening 212, extraction structure at the time of die design of the holder 210 can be formed easily. Further, the separation distance of the cut-out frame portion 211 on the back side of the cover portion 213 is set to be approximately equal to the lateral width (width of a lateral side of the free end 215b) of the frame portion 215 (refer to Fig. 12B), and is effective at the time of die design of the holder 210. Moreover, since the portion of the frame portion 211 in which the tongue portion 215 is not formed has an L-shaped sectional shape only having the holding walls 214 (refer to Figs. 13A and 13B), extraction structure at the time of die design of the holder 210 can be formed easily.

In addition, the holder 210 holding the display device 218 is connected to the frame portion 211 at the base 215a, and has a tongue portion 215 separated from the frame, portion 211 except the base 215a. Thereby, after molding of the holder 210 by dies, the holder 210 can be extracted from the dies by turning over the tongue portion 215.

Figs. 14A and 14B show the display device held by the holder of Figs. 12A and 12B, and Fig. 14A is a front view, and Fig. 14B is a perspective view. As shown in Figs. 14A and 14B, the display device 218 held by the holder 210 is composed of a liquid crystal display (LCD), an organic light emitting diode (OLED), etc. The external wiring connecting portion 219 which performs power feeding and signal conduction with respect to the display device 218 is formed on the side of one long side portion of the display device 218, and a flexible (FPC) 220 is connected to the external wiring connecting portion 219. The external wiring connecting portion 219 has a rectangular shape which is formed by extending the contour line (short side) of the display surface 218a. In addition, a self-luminescent element type display device (OLED, etc.) or a display device (LCD, etc.) including a backlight is used for the display device 218. In addition, the display device 218 is basically the same as the sub-display device 91 shown in Fig. 5, of the first embodiment.

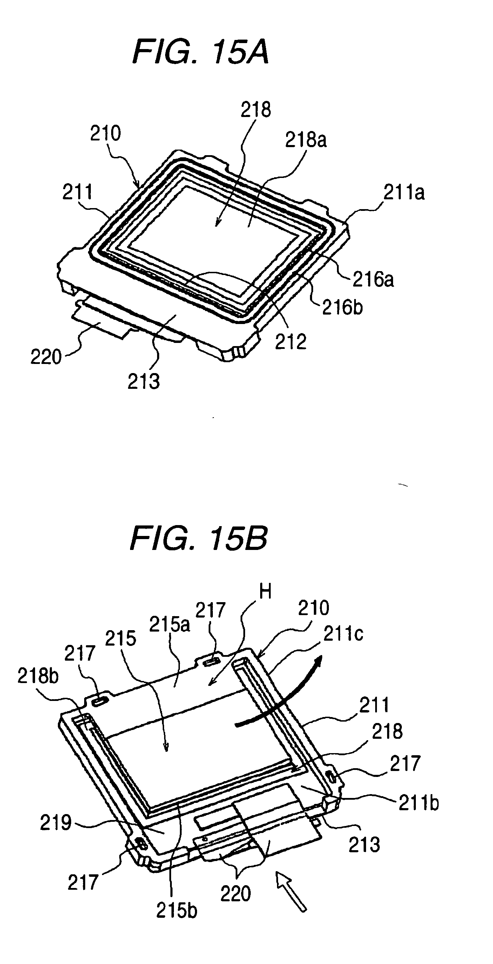

Figs. 15A and 15B show a state where the display device of Figs. 14A and 14B is mounted on the holder of Figs. 12A and 12B, and Fig. 15A is perspective view on the side of the front surface, and Fig. 15B is a perspective on the side of the back surface. As shown in Figs. 15A and 15B, in a case where the display device 218 is mounted on the holder 210 (refer to Fig. 15A), the tongue portion 215 of the holder 210 which is reversed is turned over and pulled upward (refer to an arrow of Fig. 15B), and with this state held, the reversed display device 218 with the side where the FPC 220 is not attached being oriented to the front is inserted into a lower portion of the tongue portion 215 from the cover portion 213 (refer to an outline arrow of Fig. 15B).

The inserted display device 218 is fitted into the frame portion 211 so as to plug the opening 212 from above the opening 212, and is assembled into the frame portion 211 (refer to Fig. 15B). If holding of the tongue portion 215 is released after the display device 218 is assembled into the frame portion 211, the tongue portion 215 made of an elastic member returns immediately to its original state, and is brought into contact with the back surface 218b of the display device 218. In this way, it is possible to easily attach the display device 218 to the holder 210.

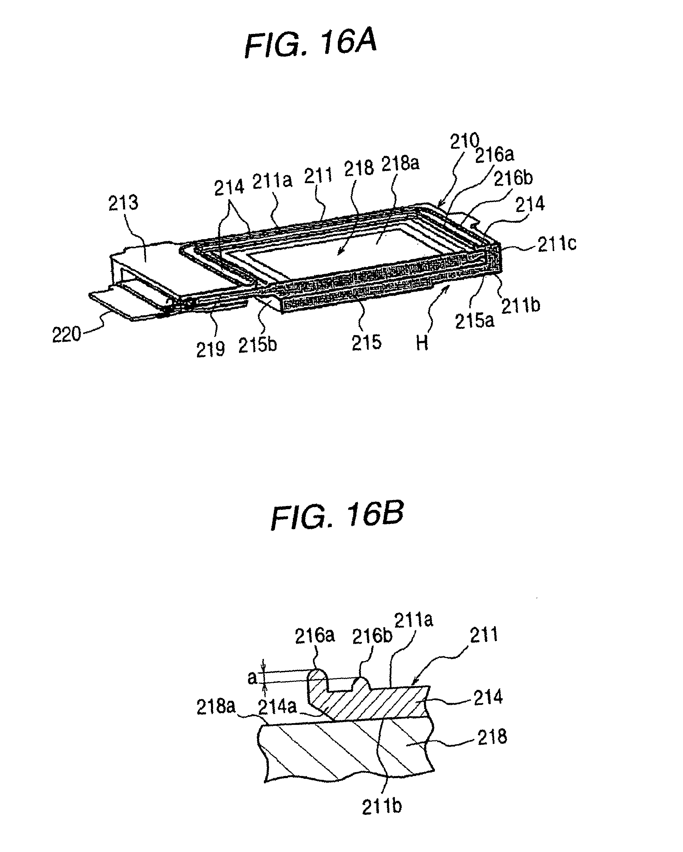

Fig. 16A is an explanatory view by the cross-section of Fig. 15A As shown in Fig. 16A, the display device 218 mounted on the holder 210 is such that the portion thereof on the side of the display surface 218a is brought into contact with the cover portion 213 and the holding walls 214, and the portion thereof on the side of the back surface 218b is brought into the tongue portion 215, and is put in a state of being sandwiched from both the front and back surfaces by the cover portion 213 and the holding walls 214, and the tongue portion 215. In this state, in the display device 218, the whole region of the display surface 218a is exposed from the opening 212 (refer to Fig. 15A), arid almost the whole region of the back surface 218b is covered with the tongue portion 215 (refer to Fig. 15B).

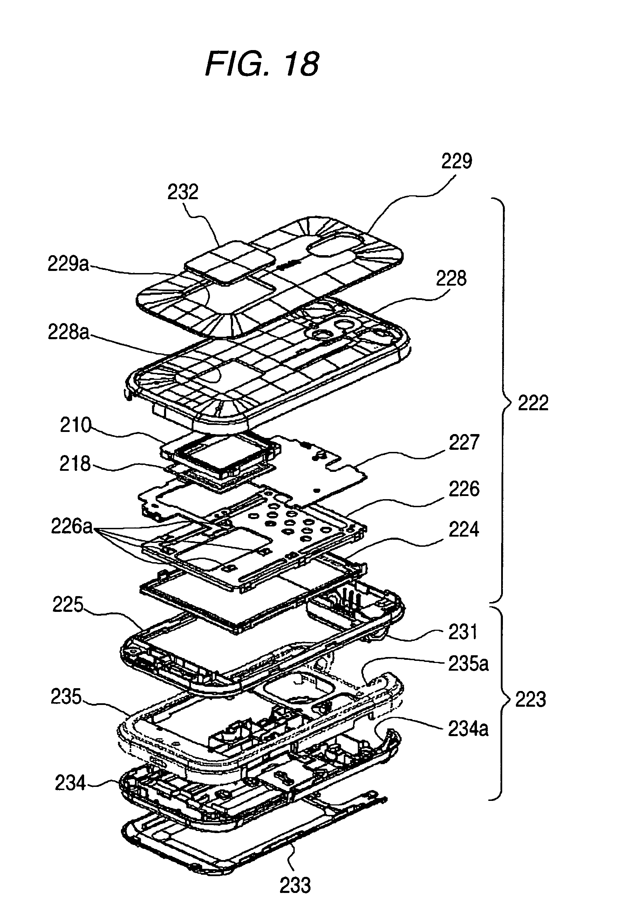

Fig. 17 is a perspective view of a portable electronic apparatus on which the holder holding the display device of Figs. 12A and 12B is mounted. Fig. 18 is an exploded configuration diagram of the portable electronic apparatus of Fig. 17. As shown in Fig. 17, a portable telephone 221 which is a portable electronic apparatus has a foldable structure in which a first housing (upper housing) 222 and a second housing (lower housing) 223 are connected together via a hinge portion 231 (refer to Fig. 18) to be described later, and the first housing 222 and the second housing 223 rotate with the hinge portion 231 as an axis in directions in which they are brought close to and separated from each other.

The portable telephone 221 is equipped with two display devices including a main display device (second display device) 224 (refer to Fig. 18) arranged on the side of the inner surface of the first housing 222, and the sub-display device composed of a display device 218 (refer to Fig. 14) arranged on the side of the outer surface, and assembled into the aforementioned holder 210.

As shown in Fig. 18, the first housing 222 has a lower case 225 on which the main display device 224 is mounted, a reinforcing sheet metal (sheet metal part) 226, a main substrate 227, an upper case 228 on which the holder 210 holding the sub-display device 218 is mounted, and an ornamental panel (ornamental plate) 229, and these respective members are stacked and assembled in the order as stated. The lower case 225 is provided with the hinge portion 231 into which an SOB (System On Board) (not shown) is assembled. The reinforcing sheet metal 226 formed by press molding also has a measure against static electricity of the sheet plate-shaped main display device 224, and has four claws (locking means) 226a for attaching and fixedly positioning the frame portion 211 of the holder 210. The claws 226a are formed by, for example, cutting and raising of a sheet metal without providing separate parts, and are inserted into and locked to four claw receiving portions 217 (refer to Fig. 12B) provided in the frame portion 211.

The main substrate 227 is formed with a device, etc. (not shown) for driving of the main display device 224, and opening 228a and 229a which expose the display surface 218a of the sub-display device 218 are opened to the ornamental panel 229 attached to the outer surface of the upper case 228 and the upper case 228. The opening 229a of the ornamental panel 229 is mounted with a window panel 232 made of a transparent member, such as acrylic resin.

The second housing 223 has a battery case 233 which serves as a lid of the lower case 234 after a driving battery (not shown) is mounted, a low case 234 on which a substrate, etc. (not shown) is mounted, and an upper case 235 on which operation keys (not shown) are mounted, and these respective members are stacked and assembled in the order as stated. The lower case 234 and the upper case 235 have hinge receiving portions 234a and 235a to which the hinge portion 231 is attached.

Fig. 19 is an exploded configuration diagram of the first housing after auxiliary sheet metal mounting. As shown in Fig. 19, after the main display device 224 on which the lower case 225 is mounted is attached to an auxiliary sheet metal 226, the sub-display device 218 is mounted on the holder 210, and the holder 210 holding the sub-display device 218 is attached to the auxiliary sheet metal 226. After the holder 210 is attached to the auxiliary sheet metal 226, the main substrate 227 is arranged on the auxiliary sheet metal 226. The FPC 220 of the sub-display device 218 exposed from the holder 210 is connected to a connector 227a of the main substrate 227. Via the FPC 220, power feeding and signal conduction to the sub-display device 218 from the main substrate 227 is performed.

After the main substrate 227 is arranged, the upper case 228 is attached to the lower case 225 such that the main substrate 227, the holder 210 holding the sub-display device 218, and the auxiliary sheet metal 226 are covered. The ornamental panel 229 is attached to the outer surface of the upper case 228, and the display surface 218a of the sub-display device 218 which is exposed from the opening 228a of the upper case 228 is covered with the transparent window panel 232 fitted into the opening 229a of the ornamental panel 229.

Figs. 20A and 20B illustrate mounting of the holder, and Fig. 20A is a perspective view before attachment of the holder, and Fig. 20B is a perspective view after attachment of the holder. As shown in Figs. 20A and 20B, the reinforcing sheet metal 226 assembled into the lower case 225 of the first housing 222 along with the main substrate 227 exposes four claws 226a from the space for arranging the holder 210 provided in the main substrate 227 (refer to Fig. 20A).

The four claw receiving portions 217 of the frame portion 211 are located in the four claws 226a, respectively, of the frame portion 211 to place the holder 210 in the reinforcing sheet metal 226, and the claws 226a are lightly press-fitted into the claw receiving portions 217. In addition, the length (height) of the claws 226a is made slightly shorter than the depth of the claw receiving portions 217, and the claws 226a are located within the claw receiving portions 217, without passing through the claw receiving portions 217. Thereby, the holder 210 holding the sub-display device 218 is fixedly located in the reinforcing sheet metal 226, and is mounted on the lower case 225 with the display surface 218a directed upward (refer to Fig. 20B).

That is, the claws 226a are formed such that they project in a display surface back side direction in the auxiliary sheet metal 226 arranged on the back side of the display surface of the main display device 224, and the claws 226a are locked to the claw receiving portions 217 to fix the holder 210 the reinforcing sheet metal 226.

Figs. 21A and 21B show a case mounting state of the holder holding the display device, and Fig. 21A is a perspective sectional view, and Fig. 21B is an enlarged sectional view. As shown in Figs. 21A and 21B, the holder 210 holding the sub-display device 218 is assembled into the upper case 228 of the first housing 222 by bringing the tongue portion 215 into contact with the reinforcing sheet metal 226 (refer to Figs. 21A and 21B), and the display surface 218a of the sub-display device 218 exposed from the opening 228a of the upper case 228 is covered with the window panel 232. In this way, the sub-display device 218 is assembled in a state of being surrounded by a shock absorbing material called the holder 210 in all the directions including the display surface, back surface, and side surface thereof As a result, the sub-display device can be consequently can be strengthened against shocks in all directions.

Fig. 22 is a perspective view when the upper case of the first housing is seen from the inner side. As shown in Fig 22, the window panel 232 is attached to the opening 228a of the upper case 228 of the first housing 222. The upper case 228 is mounted on the lower case 225 such that the window panel 232 covers the display surface 218a of the sub-display device 218. By mounting the upper case 228 on the lower case 225, the frame portion 211 of the holder 210 is pressed against an inner surface N around the opening 228a of the upper case 228 is pressed against. As a result, the display surface 218a of the sub-display device 218 is sealed by the frame portion 211 without a gap between the display surface and the inner surface of the upper case 228. Accordingly, the holder 210 can stop dust from entering from between the inner surface of the upper case 228 and the sub-display device 218, thereby preventing dust from adhering the display surface 218a. Particularly, since the inner surface N of the peripheral edge of the opening 228a against which the holder 210 is pressed is constituted by a flat surface without irregularity, the sealing performance is increased.

In this way, the display device 218 held by the holder 210 is attached to the portable telephone 221 which is a portable electronic apparatus, through the steps of mounting and holding the display device 218 on the holder 210 made of an elastic member sandwiching the display device 218 from both the front and back sides thereof; fixedly locating the holder 210 holding the display device 218 in the reinforcing sheet metal 226 which is a housing constituent part located on the side of the back surface 218b of the display device 218; and assembling the holder 210 fixedly located on the side of the back surface 218b of the display device 218 into a housing in a state of being brought into contact with the upper case 228 which is a housing constituent part located on the side of the display surface 218a of the display device 218, from the inner side of the upper case 228.

As described above, the sub-display device 218 can be mounted simply by the holder 210 made of an elastic member, such as rubber, without using a sheet, such as sponge pasted on the housing side of a conventional display device. Therefore, a display device mounting structure which also has a dust-proof effect can be obtained. That is, unlike the conventional structure holding a display device, a separate member (for example, sheet made of an elastic member) for protecting the glass surface of the display device is not needed in addition to the plastic holder holding the display device.

Further, since the holder 210 has the tongue structure by the tongue portion 215 made of an elastic member, the sub-display device 218 can be simply and easily mounted on the holder 210, the number of steps of assembling of the sub-display device 218 can be reduced, and undercut portions can be reduced as much as possible, thereby improving productivity. Moreover, since almost the whole periphery of the sub-display device 218 including the display surface 218a, the back surface 218b, and the side surface are covered with an elastic member, such as rubber, even if any shock is applied to the sub-display device 218 having the display surface 218a composed of a glass plate due to falling, etc., the shock can be absorbed effectively.

Moreover, almost the whole periphery of the sub-display device 218 is covered with the holder 210. Thereby, light quantity can be prevented from decreasing due to leak of illumination light, such as self-luminous light or back light, from other than the opening for the display surface, and flash of the display surface becomes uniform easily. Further, on the contrary, other illumination light of the main display device, etc can be prevented from entering the sub-display device.

In addition, although the example in which the holder 210 holds the sub-display device 218 of the portable telephone is shown in the above embodiment, the invention is not limited. It is needless to say that the holder may hold other display devices, and may be mounted similarly, or may be implemented in other portable electronic apparatuses, such as PDA (Personal Digital Assistant), a portable game machine, a navigation system, and an electronic dictionary.

### (Third Embodiment)

Next, a display holder according to a third embodiment of the invention will be described. In this embodiment, since the configuration of the holder other than the projection strips 216a and 216b and the configuration of the portable electronic apparatus are the same as the configurations related to Fig. 12A to Fig. 22 (except for Fig. 16B) of the second embodiment, their description will be omitted.

Fig. 16B is an enlarged explanatory view of the holding walls of Fig. 16A, showing a holder according to the third embodiment in a display device mounting state.

The two projection strip 216a and 216b are formed in each of the holding walls 214. In this embodiment, however, the projection strip 216a located on the distal side of the holding wall 214, i.e., inside the frame portion 211 and the projection strip 216b located on the proximal side of the holding walls 214, i.e., outside the frame portion 211 are different from each other in height from the front surface 211a of the frame portion 211 (refer to Fig. 16B).

That is, for example, as the projection strip 216b is formed low by a height "a" from the projection strip 216a, the two projection strips 216a and 216b are made different from each other in projection height. Further, the height "a" is desirably within about 0.05 m to 0.3 mm, and is preferably about 0.1 mm, for example

Further, a flexible portion 214a is formed below the projection strip 216a located on the distal side of the holding wall 214, i.e., inside the frame portion 211. The flexible portion 214a is formed in the position of the back surface 211b (first surface) corresponding to the position where the projection strip 216a is formed such that the thickness between the portions of the frame portion 211 on the side of the back surface 211b and the front surface 211a is small on the side of the opening 212, and is large on the outer peripheral side of the frame portion 211. The flexible portion 214a includes at least the portion in which the projection strip 216a is located. In a case where a pressing force in a downward direction of the display device is applied to a projecting tip of the projection strip 216a, the projection strip 216a easily falls sideways toward the center of the opening.

In order to form the flexible portion 214a, the distal end of the holding wall 214 may has a shape which is easily bent by an inclined surface, a stepped portion, etc. Moreover, since the flexible portion is easily bent even if the inside thereof is made hollow, the same effects can be obtained. That is, if flexibility is given to the flexible portion 214a by giving a step difference to the flexible portion in the back surface 211b to make it thin, or making the flexible portion into hollow structure directly below the projection strip 216a of the opening edge, thereby making the flexible portion thinner than other portions in the holding wall 214, the flexible portion can be easily bent when the projection strip 216a is pressed. Therefore, close contact with the peripheral edge of the window (window panel) inside the case becomes uniform easily.

The projection strip is formed as double structure of a projection strip (first projection strip) 216a inside the frame portion 211 located above the flexible portion 214a, and a projection strip (second projection strip) 216b of the frame portion 211 located outside the projection strip 216a to surround the opening 212.

According to the above-described structure, in a case where the holder 210 holding the sub-display device 218 is assembled into the upper case 228, the two projection strips 216a and 216b formed in the holding wall 214 is such that a higher one, i.e., the projection strip 216a first comes into contact with the inner surface of the upper case 228, and subsequently, a lower one, i.e., the projection strip 216b comes into contact with the inner surface of the upper case 228. In this case, since the projection strip 216a which first comes into contact with the inner surface of the upper case 228 is easily deformed in a state of falling sideways by the flexible portion 214a, the internal pressure of the housing which the projection strip comes into contact with does not become too high. Furthermore, the projection strip 216b is also brought into close contact with the inner surface sufficiently, without increasing the internal pressure of the housing.

Accordingly, in the holder 210 including the two projection strips 216a and 216b, at least the projection strip 216a is displaced and deformed, and brought into close contact with the inner surface of the upper case 228, and the projection strip 216b is bought into close contact with the inner surface of the upper case 223. As a result, sealing can be made between the display surface 218a of the sub-display device 218, and the upper case 228. For this reason, the holder 210 can improve a dustproof or waterproof effect remarkably, and can stop dust from entering from between the inner surface of the upper case 228 and the sub-display device 218, thereby preventing dust from adhering to the display surface 218a.

In this way, the display device 218 held by the holder 210 is attached to the portable telephone 221 which is a portable electronic apparatus, through the steps of mounting and holding the display device 218 on the holder 210 made of an elastic member sandwiching the display surface 218 from both the front and back sides thereof; fixedly locating the holder 210 holding the display device 218 in the reinforcing sheet metal 226 which is a housing constituent part located on the side of the back surface 218b of the display device 218; and assembling the holder 210 fixedly located on the side of the back surface 218b of the display device 218 into the housing by bringing the projection strips 216a and 216b into contact with the inner surface of the upper case 228 on which the window panel (window) 232 is mounted, in a pressed state.

That is, the portable telephone 221 includes a housing having the holder 210 holding the display device 218, and the window panel 232 in which the holder 210 is fixed with the projection strips 216a and 216b in a pressed state and which allows the display surface 218a of the display device 218 to be visible from the outside, and the holder 210 is fixed to the reinforcing sheet metal 226 which is a housing constituent part located on the side of the back surface 218b of the display device 218, and is assembled by bringing the projection strips 216a and 216b into contact with the inner surface of the upper case 228 on which the window panel 232 is mounted, in a pressed state.

Meanwhile, in a case where a projection strip is provided in order to further enhance the dust-proof effect in the conventional structure on which the display device is mounted, if the height of the projection strip is increased, it cannot be avoided that the internal pressure of a housing which the projection strip contacts becomes too high, and consequently the thickness of the housing may become large. Further in a case where projection strips are arranged double, the heights of the two projection strips do not become equal to each other, but a load may be biased to any one of the projection strips. Therefore, it is difficult that actual effects by the double structure are obtained.

If the double structure is provided, dust-proofness is improved. However, in order to absorb variations in dimensions of parts or variations in assembling, an outstanding problem occurs that, if overlapping amount increases, pressure may become high. Thus, the outside projection strip 216b whose projection height and the inside projection strip 216a whose projection height is low are provided. In the outside projection strip 216b whose projection height is low, the pressure from below is securely applied, and air-tightness is good, and in the inside projection strip 216a whose projection height is high, the pressure is luw, but the overlapping amount is large. Thus, even if inner parts are moved due to large dimension variations, vibration, or a falling shock, it is possible to cope with them. That is, dust-proofness is further improved by virtue of the respective effects.

### (Fourth Embodiment)

Next, a display holder according to a fourth embodiment of the invention will be described. In this embodiment, since the configuration of the holder other than the claw receiving portions 217 and the configuration of the portable electronic apparatus are the same as the configurations related to Fig. 12A to Fig. 22 (except for Fig. 16B) of the second embodiment, their description will be omitted. In addition, this point may be the same configurations as Figs. 5 to 9, and Fig. 11 in the first embodiment.

In this embodiment, each claw receiving portions 217 (locking portion) is a non-through hole which is bored on the side of the back surface 211b of the frame portion 211, and is formed so as not to pass through the front surface 211a of the frame portion 211, and is formed in the shape of a long hole whose longitudinal direction runs along each side of the frame portion 211 (refer to Fig. 12B). That is, the non-through hole which forms each claw receiving portion 217 has an oblong opening surface, a non-through portion (that is, the gap "b" shown in Fig. 24) between the bottom surface of the non-through hole and the front surface 211a of the frame portion 211 is formed with a thickness which is shorter than the length of a minimum side of the opening surface, and with a thickness which is shorter than the projecting length of the claws 226a from the reinforcing sheet metal 226. Further, this non-through hole is formed more deeply than a length obtained by summing up the thickness (distance between front and back surfaces) of the held display device 218 and the thickness of the tongue portion 215. In addition, the depth direction of this non-through hole is made parallel to the thickness direction of the display device 218.

Meanwhile, if assemblability in manufacture is taken into consideration, it is desirable that the sub-display device is integrated with a case or an internal part housed in the case. Therefore, it is conceivable that a projection formed so as to be cut and raised from the reinforcing sheet metal of the main display device that is the internal part is fitted into a hole provided in the holder. Since the holder includes shock absorption for protection from a shock along with the sealing performance of preventing entrance of dust, etc. as described above, the holder is formed of an elastic member, such as silicon resin or rubber.

Here, in a case where a holder made of such an elastic member is formed by dies, a die structure in which a narrow hole for fitting a plate-like projection cut and raised from a sheet metal is conceivable.

Fig. 23A, 23B, and 23C show a holder made of an elastic member in which a narrow hole is formed, and Fig. 23A is a perspective view, Fig. 23B is a cross-sectional explanatory view at the time of formation by dies for forming the holder (step 1), and Fig. 23C is a cross-sectional explanatory view at the time of formation by the dies for forming the holder (step 2). In addition, Figs. 23B and 23C show cross-sections taken along a line X-X of Fig. 23A.

As shown in Fig. 23A, the, holder 301 is formed of an elastic member, and narrow holes 302 (fixing holes 47 in Fig. 6, and the claw receiving portions 217 in Fig. 12) for fitting plate-like projections are formed in four places of the peripheral edge thereof. As a die 303 which molds the holder 301, for example, a structure composed of a core-side die 304 which has a narrow hole forming portion 304a for forming each of the narrow holes 302 and a cavity-side die 305 is conceivable (refer to Fig. 23B).

In the case of the die 303, during molding of a holder, the narrow hole forming portion 304a which is an elongate salient portion of the core-side die 304 directly come into contact with the cavity-side die 305. Thus, the narrow hole forming portion 304a to which large load is applied is easily broken, and the life span of the die is shortened. Further, the elastic member which is a forming material for the holder 301 is apt to generate burrs in a die mating surface p. In a case where the generated burrs are peeled off inside a product, it is also considered that the burrs cause a malfunction.

Thus, instead of the cavity-side die 305, a die 307 using the cavity-side die 306 in which a clearance is made in the portion which the narrow hole forming portion 304a contacts is provided, molding is made by the die 307 such that a lid portion 308 by the clearance is attached to the narrow hole 302 (Fig. 23C), and after the molding, the lid portion 308 is cut off by manual operation.

However, since there are needs for prolonging the life span of the die, and reducing the cost by the reduction of man hours, a configuration as shown in the following Fig. 24 will be studied.

Fig. 24 is a cross-sectional explanatory view when a holder is formed by a die for forming the holder. In addition, Fig. 24 shows the same cross-section as a cross-section taken along a line X-X of Fig. 23A. As shown in Fig. 24, a die 240 which molds the holder 210 is constituted by a core-side die 241 having a narrow hole forming portion 241a for forming the claw receiving portion 217 formed in the shape of a narrow hole, and a cavity-side die 242.

The narrow hole forming portion 241a is formed with a height (projecting length) having a slight gap "b" from the cavity-side die 242 at the time of molding of a holder which results in a die-closed state. The gap "b" is desirably within a range of 0. 15 mm to 0.3 mm, and is preferably about 0.2 mm, for example. That is, since the claw receiving portion 217 is put in a fitting state by press-fitting the claw 226a, it needs extensibility. As a result, it is desirable to form the claw receiving portion as thin as possible if the extensibility is considered. Thus, the claw receiving portion is pierced, leaving such an amount that the extensibility is lost. Further, the gap "b" allows, for example, rubber which is a holder molding material to sufficiently circulate into a cavity at the time of molding of a holder by a die.

Accordingly, at the time of molding of a holder, the narrow hole forming portion 241 a does not contact the cavity-side die 242, and the die mating surface p is not formed between the narrow hole forming portion and the cavity-side die 242. For this reason, since large load is not applied to the narrow hole forming portion 241a which is an elongate salient portion during molding of a holder, the life span of the die is not shortened, and burrs are not generated in the die mating surface "p".

Thus, as shown in Fig. 23C, in a case where a die 307 using the cavity-side die 306 in which a clearance is made in the portion which the narrow hole forming portion 304a contacts is provided instead of the cavity-side die 305, and molding is made by the die 307 such that a lid portion 308 by the clearance is attached to the narrow hole 302 (Fig. 23C), the lid portion 308 is cut off by manual operation after the molding.

That is, although it is necessary to cut off the clearance by manual operation after molding in a case where a clearance is made in the portion which the narrow hole forming portion 241a contacts, the lid portion by the clearance is not formed, the man hours can be invited, and the cost can be reduced.

Further, in the conventional structure on which the display device is mounted, a separate member (for example, sheet made of an elastic member) for protecting the display surface of the display device in a case where a shock, etc. is applied is needed in addition to the plastic holder holding the display device. Therefore, it could not be avoided that the cost increases.

In addition, the holder 210 holding the display device 218 is connected to the frame portion 211 at the base 215a, and has a tongue portion 215 separated from the frame portion 211 except the base 215a. Thereby, after molding of the holder 210 by dies, the holder 210 can be extracted from the dies by turning over the tongue portion 215.

In the structure where the above is assembled, the direction in which the display device is sandwiched by the upper case 228 and the lower case 225 and the direction in which the claws 226a are engaged coincide with each other. Therefore, even if the claw receiving portion 217 is a non-through hole, the sub-display device 218 is not dropped off after assembling.

Further, in the holder of this embodiment, by leaving a slight gap "b" between the narrow hole forming portion 241a of the core-side die 241 which forms the claw receiving portion 217, and the cavity-side die 242, the load to be applied to a die salient portion can be alleviated, and die durability can be improved. Further, since the claw receiving portion 217 is formed as a non-through hole, generation of burrs can be eliminated, and the operation of tearing off the lid portion is not needed. Thus, the cost in manufacture of a holder can be reduced.

In addition, although the first to fourth embodiments have been described separately, it is needless to say that other effects can be expected by implementing the embodiments in combination with each other.

## Claims

1. A display holder (31) for holding a display device (91), comprising
a frame portion (40) for covering and holding a peripheral edge of the display device (91); and
a back surface holding portion (41) which is formed continuously from the frame portion (40) to hold the back side of the display device (91), wherein:
the frame portion (40) includes an opening (33) opened so as to expose a position corresponding to a display surface (30) of the display device (91), and a locking portion (47a-d) for being locked to a fixed portion (32a-d),
the frame portion (40) and the back surface holding portion (41) are integrally made of an elastic material,
the frame portion (40) is further formed with an insertion portion (52) for inserting the display device (91), **characterised in that**
an other opening (50) is formed between the back surface holding portion (41) and the insertion portion (52),
a cutout (54a,b) is formed around the other opening (50) in the frame portion (40), and
a region which faces the other opening (50) of the frame portion (40) becomes a guide portion (55) which is tiltable by the cutout (54a,b), and is able to guide insertion of the display device (91).

2. The display holder (31) according to claim 1, wherein the locking portion (47a-d) is a fixing hole which is opened and bored on the back side of the frame portion (40).

3. The display holder (31) according to claim 1, wherein wiring to be connected to the inserted display device (91) is arranged in the insertion portion (52).

4. A portable electronic apparatus (1) comprising a display device (91), a housing (10), and the display holder (31) according to claim 1 fixed within the housing (10) in a state where the display device (91) is held.

5. The portable electronic apparatus (1) according to claim 4, further comprising:
a second display device (90) which is contained in the housing (10) and is larger than the display device (91); and
a sheet metal member (14) which is disposed on the back side of a display surface (29) of the second display device (90) to reinforce the second display device (90),
wherein the sheet metal member (14) has as the fixed portion (32a-d) a fixing claw cut that is raised from the sheet metal member (14) on the side opposite the side where the second display device (90) is disposed.

6. A display holder (31) for holding a display device (91), comprising:
a frame portion (40) for covering and holding a peripheral edge of the display device (91); and
a back surface holding portion (41) which is formed continuously from the frame portion (40) to hold the back side of the display device (91), wherein,
the frame portion (40) includes an opening (33) opened so as to expose a position corresponding to a display surface (30) of the display device (91), and a locking portion (47a-d) for being locked to a fixed portion (32a-d),
the frame portion (40) and the back surface holding portion (41) are integrally made of an elastic material, and **characterised in that**
a portion of the back surface holding portions constitutes a connecting portion (215a) which is continuous with the frame portion (211), and the other portion of the back surface holding portion is formed in the shape of a tongue (215) which is separated from the frame portion (211) and is used as a free end (215b) within a region which faces the opening (212).

7. The display holder (210) according to claim 6,
wherein the thickness in the vicinity of the connecting portion (215a) is made smaller than other portions of the back surface holding portion.

8. The display holder (210) according to claim 6,
wherein the frame portion (211) has a first projection strip (216a) which is projected and formed on the front surface so as to surround a peripheral edge of the opening (212).

9. The display holder (210) according to claim 8,
further comprising a flexible portion (214a) which is formed at the edge of the opening (212) of the frame portion (211), and is formed more thinly than other portions of the frame portion (211),
wherein the flexible portion (214a) is formed such that the thickness between a first surface of the frame portion (211) which faces the display surfaces (218a) and a second surface of the frame portion (211) which is a surface opposite the first surface is small on the side of the opening (212), and is large on the outer peripheral side of the frame portion (211).

10. The display holder (210) according to claim 8.
wherein a second projection strip (216b) which surrounds the opening (212) outside the first projection strip (216a) is further formed in the surface of the frame portion (211) where the first projection strip (216a) is formed.

11. The display holder (210) according to claim 10,
wherein the first projection strip (216a) and the second projection strip (216b) are different from each other in projection amount from the frame portion (211).

12. The display holder (210) according to claim 11,
wherein the projection amount of the second projection strip (216b) is smaller than the projection amount of the first projection strip (216a).

13. The portable electronic apparatus (1) according to claim 4,
wherein the housing (10) has a window which allows a display surface (218a) of the display device (218) to be visible from the outside, and
wherein the display holder (210) has a first projection strip (216a) which is projected and formed so as to surround a peripheral edge of the opening (212), and the display device (218) is held and housed within the housing (10) in a state where the first projection strip (216a) is pressed against a peripheral edge of the window inside the housing (10).

14. The portable electronic apparatus (1) according to claim 13, further comprising:
a second display device (90) which is contained in the housing (10) and is larger than the display device (218); and
a sheet metal member (14) which is disposed on the back side of a display surface (29) of the second display device (90) to reinforce the second display device (90),
wherein the sheet metal member (14) has as the fixed portion (32a-d) a fixing claw cut that is raised from the sheet metal member (14) on the side opposite the side where the second display device (90) is disposed, and
wherein the display holder (210) is fixed within the housing (10) such that the first projection strip (216a) is sandwiched so as to contact between the sheet metal member (14) and the peripheral edge of the window of the housing (10) inner surface.

15. The display holder (31) according to claim 2,
wherein the fixing hole (47a-d) is a non-through hole which is bored in a direction parallel to the thickness direction of the display device (91), and is formed so as not to be pierced on the front side of the frame portion (40).

16. The display holder (31) according to claim 15,
wherein the non-through hole has an elongated opening shape, and the thickness of a non-through portion between the front side of the frame portion (40) of the non-through hole is made smaller than the lateral length of the opening shape.

17. The display holder (31) according to claim 15,
wherein the non-through hole is formed more deeply, than a length obtained by summing up the thickness of the display device (91) to be held and the thickness of the back surface holding portion (41).

18. The portable electronic apparatus (1) according to claim 4,
wherein a portion of the back surface holding portion constitutes a connecting portion which is continuous with the frame portion (211), and the other portion of the back surface holding portion is separated from the frame portion (211) within a region which faces the opening (212).

19. The portable electronic apparatus (1) according to claim 14,
wherein a second projection strip (216b) which surrounds the opening (212) outside the first projection strip (216a) is further formed in the surface of the frame portion (211) where the first projection strip (216a) is formed, and the first projection strip (216a) and the second projection strip (216b) are different from each other in projection amount from the frame portion (211).

## Patentansprüche

1. Anzeigehalterung (31) zum Halten einer Anzeigevorrichtung (91), die umfasst:
einen Rahmenabschnitt (40) zum Abdecken und Halten einer Umfangskante der Anzeigevorrichtung (91); und
einen Rückoberflächen-Halteabschnitt (41), der ausgehend von dem Rahmenabschnitt (40) ununterbrochen ausgebildet ist, um die Rückseite der Anzeigevorrichtung (91) zu halten, wobei:
der Rahmenabschnitt (40) eine Öffnung (33) aufweist, die so geöffnet ist, dass sie eine einer Anzeigeoberfläche (30) der Anzeigevorrichtung (21) entsprechende Position freilegt, und einen Verriegelungsabschnitt (47a-d) aufweist, um an einem befestigten Abschnitt (32a-d) verriegelt zu werden,
wobei der Rahmenabschnitt (40) und der Rückoberflächen-Halteabschnitt (41) einteilig aus einem elastischen Material hergestellt sind,
wobei der Rahmenabschnitt (40) ferner mit einem Einsetzabschnitt (52) zum Einsetzen der Anzeigevorrichtung (91) ausgebildet ist, **dadurch gekennzeichnet, dass**
eine andere Öffnung (50) zwischen dem Rückoberflächen-Halteabschnitt (41) und dem Einsetzabschnitt (52) ausgebildet ist,
ein Ausschnitt (54a, b) um die andere Öffnung (50) in dem Rahmenabschnitt (40) ausgebildet ist und
ein Bereich, der der anderen Öffnung (50) des Rahmenabschnitts (40) zugewandt ist, ein Führungsabschnitt (55) wird, der durch den Ausschnitt (54a, b) neigbar ist und das Einsetzen der Anzeigevorrichtung (91) führen kann.

2. Anzeigehalter (31) nach Anspruch 1, wobei der Verriegelungsabschnitt (47a-d) ein Befestigungsloch ist, das offen ist und in die Rückseite des Rahmenabschnitts (40) gebohrt ist.

3. Anzeigehalter (31) nach Anspruch 1, wobei eine mit der eingesetzten Anzeigevorrichtung (91) zu verbindende Verdrahtung in dem Einsetzabschnitt (52) angeordnet ist.

4. Tragbare elektronische Vorrichtung (1), die eine Anzeigevorrichtung (91), ein Gehäuse (10) und die Anzeigehalterung (31) nach Anspruch 1 umfasst, die in dem Gehäuse (10) in einem Zustand befestigt ist, in dem die Anzeigevorrichtung (91) gehalten wird.

5. Tragbare elektronische Vorrichtung (1) nach Anspruch 4, die ferner umfasst:
eine zweite Anzeigevorrichtung (90), die in dem Gehäuse (10) enthalten ist und größer ist als die Anzeigevorrichtung (91); und
ein Blechelement (14), das an der Rückseite einer Anzeigeoberfläche (29) der zweite Anzeigevorrichtung (90) angeordnet ist, um die zweite Anzeigevorrichtung (90) zu verstärken,
wobei das Blechelement (14) als befestigten Abschnitt (32a-d) einen Befestigungsklauenausschnitt besitzt, der gegenüber dem Blechelement (14) auf der Seite gegenüber jener Seite, wo die zweite Anzeigevorrichtung (90) angeordnet ist, erhöht ist.

6. Anzeigehalterung (31) zum Halten einer Anzeigevorrichtung (91), die umfasst:
einen Rahmenabschnitt (40) zum Abdecken und Halten einer Umfangskante der Anzeigevorrichtung (91); und
einen Rückoberflächen-Halteabschnitt (41), der ausgehend von dem Rahmenabschnitt (40) ununterbrochen ausgebildet ist, um die Rückseite der Anzeigevorrichtung (91) zu halten, wobei:
der Rahmenabschnitt (40) eine Öffnung (33) aufweist, die so geöffnet ist, dass sie eine einer Anzeigeoberfläche (30) der Anzeigevorrichtung (91) entsprechende Position freilegt, und einen Verriegelungsabschnitt (47a-d) aufweist, um an einem befestigten Abschnitt (32a-d) verriegelt zu werden,
wobei der Rahmenabschnitt (40) und der Rückoberflächen-Halteabschnitt (41) einteilig aus einem elastischen Material hergestellt sind, **dadurch gekennzeichnet, dass**
ein Abschnitt des Rückoberflächen-Halteabschnitts einen Verbindungsabschnitt (215a) bildet, der mit dem Rahmenabschnitt (211) ununterbrochen ausgebildet ist, und der andere Abschnitt des Rückoberflächen-Halteabschnitts in Form einer Zunge (215) ausgebildet ist, die von dem Rahmenabschnitt (211) getrennt ist und als ein freies Ende (215b) in einem der Öffnung (212) zugewandten Bereich verwendet wird.

7. Anzeigehalterung (210) nach Anspruch 6,
wobei die Dicke in der Umgebung des Verbindungsabschnitts (215a) kleiner als andere Abschnitte des Rückoberflächen-Halteabschnitts ausgebildet ist.

8. Anzeigehalterung (210) nach Anspruch 6,
wobei der Rahmenabschnitt (211) einen ersten Vorsprungsstreifen (216a) besitzt, der von der vorderen Oberfläche so vorsteht und daran ausgebildet ist, dass er eine Umfangskante der Öffnung (212) umgibt.

9. Anzeigehalterung (210) nach Anspruch 8,
die ferner einen flexiblen Abschnitt (214a) aufweist, der an der Kante der Öffnung (212) des Rahmenabschnitts (211) ausgebildet ist und dünner als andere Abschnitte des Rahmenabschnitts (211) ausgebildet ist,
wobei der flexible Abschnitt (214a) in der Weise ausgebildet ist, dass die Dicke zwischen einer ersten Oberfläche des Rahmenabschnitts (211), der der Anzeigeoberfläche (218a) zugewandt ist, und einer zweiten Oberfläche des Rahmenabschnitts (211), die eine Oberfläche gegenüber der ersten Oberfläche ist, auf Seiten der Öffnung (212) klein ist und auf der äußeren Umfangsseite des Rahmenabschnitts (211) groß ist.

10. Anzeigehalterung (210) nach Anspruch 8,
wobei ein zweiter Vorsprungsstreifen (216b), der die Öffnung (211) außerhalb des ersten Vorsprungsstreifens (216a) umgibt, ferner in der Oberfläche des Rahmenabschnitts (211), wo der erste Vorsprungsstreifen (216a) ausgebildet ist, ausgebildet ist.

11. Anzeigehalterung (210) nach Anspruch 10,
wobei der erste Vorsprungsstreifen (216a) und der zweite Vorsprungsstreifen (216b) in Bezug auf den Vorsprungsbetrag von dem Rahmenabschnitt (211) voneinander verschieden sind.

12. Anzeigehalterung (210) nach Anspruch 11,
wobei der Vorsprungsbetrag des zweiten Vorsprungsstreifens (216b) kleiner ist als der Vorsprungsbetrag des ersten Vorsprungsstreifens (216a).

13. Tragbare elektronische Vorrichtung (1) nach Anspruch 4,
wobei das Gehäuse (10) ein Fenster besitzt, das ermöglicht, dass eine Anzeigeoberfläche (218a) der Anzeigevorrichtung (218) von außen sichtbar ist, und
wobei die Anzeigehalterung (210) einen ersten Vorsprungsstreifen (216a) besitzt, der so vorsteht und ausgebildet ist, dass er eine Umfangskante der Öffnung (212) umgibt, und die Anzeigevorrichtung (218) in dem Gehäuse (10) in einem Zustand gehalten und untergebracht ist, in dem der erste Vorsprungsstreifen (216a) gegenüber einer Umfangskante des Fensters im Gehäuse (10) gepresst wird.

14. Tragbare elektronische Vorrichtung (1) nach Anspruch 13, die ferner umfasst:
eine zweite Anzeigevorrichtung (90), die in dem Gehäuse (10) enthalten ist und größer ist als die Anzeigevorrichtung (218); und
ein Blechelement (14), das auf der Rückseite der Anzeigeoberfläche (29) der zweiten Anzeigevorrichtung (90) angeordnet ist, um die zweite Anzeigevorrichtung (90) zu verstärken,
wobei das Blechelement (14) als den befestigten Abschnitt (32a-d) einen Befestigungsklauenausschnitt besitzt, der gegenüber dem Blechelement (14) auf der Seite gegenüber jener Seite, auf der die zweite Anzeigevorrichtung (90) angeordnet ist, erhöht ist, und
wobei die Anzeigehalterung (210) in dem Gehäuse (10) in der Weise befestigt ist, dass der erste Vorsprungsstreifen (216a) in der Weise sandwichartig angeordnet ist, dass er zwischen dem Blechelement (14) und der Umfangskante des Fensters der inneren Oberfläche des Gehäuses (10) in Kontakt ist.

15. Anzeigehalterung (31) nach Anspruch 2,
wobei das Befestigungsloch (47a-d) ein Nichtdurchgangsloch ist, das in einer Richtung parallel zu der Dickenrichtung der Anzeigenvorrichtung (91) gebohrt ist und so geformt ist, dass es nicht in die Vorderseite des Rahmenabschnitts (40) mündet.

16. Anzeigehalterung (31) nach Anspruch 15,
wobei das Nichtdurchgangsloch eine lang gestreckte Öffnungsform besitzt und die Dicke eines Nichtdurchgangsabschnitts zwischen der Vorderseite des Rahmenabschnitts (40) des Nichtdurchgangslochs kleiner ist als die seitliche Länge der Öffnungsform.

17. Anzeigehalterung (31) nach Anspruch 15,
wobei das Nichtdurchgangsloch tiefer ausgebildet ist als eine Länge, die durch Aufsummieren der Dicke der zu haltenden Anzeigevorrichtung (91) und der Dicke des Rückoberflächen-Halteabschnitts (41) erhalten wird.

18. Tragbare elektronische Vorrichtung (1) nach Anspruch 4,
wobei ein Abschnitt des Rückoberflächen-Halteabschnitts einen Verbindungsabschnitt bildet, der mit dem Rahmenabschnitt (211) ununterbrochen ausgebildet ist, und der andere Abschnitt des Rückoberflächen-Halteabschnitts von dem Rahmenabschnitt (211) in einem Bereich, der der Öffnung (212) zugewandt ist, getrennt ist.

19. Tragbare elektronische Vorrichtung (1) nach Anspruch 14,
wobei ein zweiter Vorsprungsstreifen (216b), der die Öffnung (212) außerhalb des ersten Vorsprungsstreifens (216a) umgibt, ferner in der Oberfläche des Rahmenabschnitts (211) dort ausgebildet ist, wo der erste Vorsprungsstreifen (211a) ausgebildet ist, und wobei der erste Vorsprungsstreifen (216a) und der zweite Vorsprungsstreifen (216b) in Bezug auf den Vorsprungsbetrag von dem Rahmenabschnitt (211) voneinander verschieden sind.

## Revendications

1. Support d'affichage (31) pour supporter un dispositif d'affichage (91), comprenant :
une partie de châssis (40) pour recouvrir et supporter un bord périphérique du dispositif d'affichage (91) ; et
une partie de support de surface arrière (41) qui est formée de manière continue à partir de la partie de châssis (40) pour supporter le côté arrière du dispositif d'affichage (91), dans lequel :
la partie de châssis (40) comprend une ouverture (33) ouverte afin d'exposer une position correspondant à une surface d'affichage (30) du dispositif d'affichage (91), et une partie de blocage (47a-d) pour être bloquée dans une partie fixe (32a-d),
la partie de châssis (40) et la partie de support de surface arrière (41) sont réalisées de manière solidaire à partir d'un matériau élastique,
la partie de châssis (40) est en outre formée avec une partie d'insertion (52) pour insérer le dispositif d'affichage (91), **caractérisé en ce que** :
une autre ouverture (50) est formée entre la partie de support de surface arrière (41) et la partie d'insertion (52),
une découpe (54a, b) est formée autour de l'autre ouverture (50) dans la partie de châssis (40), et
une région qui fait face à l'autre ouverture (50) de la partie de châssis (40) devient une partie de guidage (55) qui peut être inclinée par la découpe (54a, b) et peut guider l'insertion du dispositif d'affichage (91).

2. Support d'affichage (31) selon la revendication 1, dans lequel la partie de blocage (47a-d) est un trou de fixation qui est ouvert et alésé sur le côté arrière de la partie de châssis (40).

3. Support d'affichage (31) selon la revendication 1, dans lequel le câblage à raccorder au dispositif d'affichage (91) inséré est agencé dans la partie d'insertion (52).

4. Appareil électronique portable (1) comprenant un dispositif d'affichage (91), un boîtier (10) et un support d'affichage (31) selon la revendication 1, fixé à l'intérieur du boîtier (10) dans un état dans lequel le dispositif d'affichage (91) est supporté.

5. Appareil électronique portable (1) selon la revendication 4, comprenant en outre :
un deuxième dispositif d'affichage (90) qui est contenu dans le boîtier (10) et est plus grand que le dispositif d'affichage (91) ; et
un élément en tôle métallique (14) qui est disposé sur le côté arrière d'une surface d'affichage (29) du deuxième dispositif d'affichage (90) pour renforcer le deuxième dispositif d'affichage (90),
dans lequel l'élément en tôle métallique (14) a, en tant que partie fixe (32a-d), une découpe formant griffe de fixation qui est surélevée par rapport à l'élément en tôle métallique (14) sur le côté opposé au côté où le deuxième dispositif d'affichage (90) est disposé.

6. Support d'affichage (31) pour supporter un dispositif d'affichage (91) comprenant :
une partie de châssis (40) pour recouvrir et supporter un bord périphérique du dispositif d'affichage (91) ; et
une partie de support de surface arrière (41) qui est formée de manière continue à partir de la partie de châssis (40) pour supporter le côté arrière du dispositif d'affichage (91), dans lequel :
la partie de châssis (40) comprend une ouverture (33) ouverte afin d'exposer une position correspondant à la surface d'affichage (30) du dispositif d'affichage (91), et une partie de blocage (47a-d) destinée à être bloquée dans une partie fixe (32a-d),
la partie de châssis (40) et la partie de support de surface arrière (41) sont réalisées de manière solidaire avec un matériau élastique, et **caractérisé en ce que** :
une partie de la partie de support de surface arrière constitue une partie de raccordement (215a) qui est continue avec la partie de châssis (211), et l'autre partie de la partie de support de surface arrière est formée selon la forme d'une languette (215) qui est séparée de la partie de châssis (211) et est utilisée en tant qu'extrémité libre (215b) à l'intérieur d'une région qui fait face à l'ouverture (212).

7. Support d'affichage (210) selon la revendication 6, dans lequel l'épaisseur à proximité de la partie de raccordement (215a) est plus petite que les autres parties de la partie de support de surface arrière.

8. Support d'affichage (210) selon la revendication 6, dans lequel la partie de châssis (211) a une première bande formant saillie (216a) qui fait saillie et est formée sur la surface avant afin d'entourer un bord périphérique de l'ouverture (212).

9. Support d'affichage (210) selon la revendication 8,
comprenant en outre une partie flexible (214a) qui est formée au niveau du bord de l'ouverture (212) de la partie de châssis (211), et est formée de manière plus fine que les autres parties de la partie de châssis (211),
dans lequel la partie flexible (214a) est formée de sorte que l'épaisseur entre une première surface de la partie de châssis (211) qui fait face à la surface d'affichage (218a) et une deuxième surface de la partie de châssis (211) qui est une surface opposée à la première surface est petite sur le côté de l'ouverture (212), et est grande sur le côté périphérique externe de la partie de châssis (211).

10. Support d'affichage (210) selon la revendication 8,
dans lequel la deuxième bande formant saillie (216b) qui entoure l'ouverture (212) à l'extérieur de la première bande formant saillie (216a) est en outre formée dans la surface de la partie de châssis (211) où la première bande formant saillie (216a) est formée.

11. Support d'affichage (210) selon la revendication 10,
dans lequel la première bande formant saillie (216a) et la deuxième bande formant saillie (216b) sont différentes l'une de l'autre selon une quantité de saillie par rapport à la partie de châssis (211).

12. Support d'affichage (210) selon la revendication 11,
dans lequel la quantité de saillie de la deuxième bande formant saillie (216b) est plus petite que la quantité de saillie de la première bande formant saillie (216a).

13. Appareil électronique portable (1) selon la revendication 4,
dans lequel le boîtier (10) a une fenêtre qui permet à une surface d'affichage (218a) du dispositif d'affichage (218) d'être visible de l'extérieur, et
dans lequel le support d'affichage (210) a une première bande formant saillie (216a) qui fait saillie et est formée afin d'entourer un bord périphérique de l'ouverture (212), et le dispositif d'affichage (218) est maintenu et logé à l'intérieur du boîtier (10) dans un état dans lequel la première bande formant saillie (216a) est comprimée contre un bord périphérique de la fenêtre à l'intérieur du boîtier (10).

14. Appareil électronique portable (1) selon la revendication 13, comprenant en outre :
un deuxième dispositif d'affichage (90) qui est contenu dans le boîtier (10) et est plus grand que le dispositif d'affichage (218) ; et
un élément en tôle métallique (14) qui est disposé sur le côté arrière d'une surface d'affichage (29) du deuxième dispositif d'affichage (90) pour renforcer le deuxième dispositif d'affichage (90),
dans lequel l'élément en tôle métallique (14) a, en tant que partie fixe (32a-d), une découpe formant griffe de fixation qui est surélevée par rapport à l'élément en tôle métallique (14) sur le côté opposé au côté où le deuxième dispositif d'affichage (90) est disposé, et
dans lequel le support d'affichage (210) est fixé à l'intérieur du boîtier (10) de sorte que la première bande formant saillie (216a) est prise en sandwich afin d'être en contact entre l'élément en tôle métallique (14) et le bord périphérique de la fenêtre de la surface interne du boîtier (10).

15. Support d'affichage (31) selon la revendication 2,
dans lequel le trou de fixation (47a-d) est un trou non traversant qui est alésé dans une direction parallèle au sens de l'épaisseur du dispositif d'affichage (91), et est formé afin de ne pas être percé sur le côté avant de la partie de châssis (40).

16. Support d'affichage (31) selon la revendication 15,
dans lequel le trou non traversant a une forme d'ouverture allongée et l'épaisseur d'une partie non traversante entre le côté avant de la partie de châssis (40) du trou non traversant est plus petite que la longueur latérale de la forme d'ouverture.

17. Support d'affichage (31) selon la revendication 15,
dans lequel le trou non traversant est formé plus en profondeur qu'une longueur obtenue en additionnant l'épaisseur du dispositif d'affichage (91) à supporter et l'épaisseur de la partie de support de surface arrière (41).

18. Appareil électronique portable (1) selon la revendication 4,
dans lequel une partie de la partie de support de surface arrière constitue une partie de raccordement qui est continue avec la partie de châssis (211), et l'autre partie de la partie de support de surface arrière est séparée de la partie de châssis (211) à l'intérieur d'une région qui fait face à l'ouverture (212).

19. Appareil électronique portable (1) selon la revendication 14,
dans lequel une deuxième bande formant saillie (216b) qui entoure l'ouverture (212) à l'extérieur de la.première bande formant saillie (216a) est en outre formée dans la surface de
la partie de châssis (211) où la première bande formant saillie (216a) est formée, et la première bande formant saillie (216a) et la deuxième bande formant saillie (216b) sont différentes l'une de l'autre du point de vue de la quantité de saillie par rapport à la partie de châssis (211).
